(19) Europäisches Patentamt
European Patent Office
Office européen des brevets

(11) **EP 4 227 858 A1**

(12) **EUROPEAN PATENT APPLICATION**
published in accordance with Art. 153(4) EPC

(43) Date of publication:
**16.08.2023 Bulletin 2023/33**

(21) Application number: **21891127.9**

(22) Date of filing: **10.11.2021**

(51) International Patent Classification (IPC):
**G06N 3/08** (2023.01)

(52) Cooperative Patent Classification (CPC):
**G06F 18/00; G06N 3/04; G06N 3/063; G06N 3/08**

(86) International application number:
**PCT/CN2021/129757**

(87) International publication number:
**WO 2022/100607 (19.05.2022 Gazette 2022/20)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **13.11.2020 CN 202011268949**

(71) Applicant: **Huawei Technologies Co., Ltd.**
**Shenzhen, Guangdong 518129 (CN)**

(72) Inventors:
- XIAO, Yifan
  Shenzhen, Guangdong 518129 (CN)
- ZHANG, Jian
  Shenzhen, Guangdong 518129 (CN)
- ZHONG, Zhao
  Shenzhen, Guangdong 518129 (CN)

(74) Representative: **MERH-IP Matias Erny Reichl Hoffmann**
**Patentanwälte PartG mbB**
**Paul-Heyse-Strasse 29**
**80336 München (DE)**

(54) **METHOD FOR DETERMINING NEURAL NETWORK STRUCTURE AND APPARATUS THEREOF**

(57)     A neural network structure determining method is disclosed. The method includes: obtaining a to-be-trained initial neural network, where the initial neural network includes M first blocks block and a second block, the second block is connected to each first block, and each first block corresponds to one trainable target weight; performing model training on the initial neural network, to obtain M updated target weights; and updating a connection relationship between the second block and the M first blocks in the initial neural network based on the M updated target weights, to obtain a first neural network. In this application, in a process of searching for a connection relationship between blocks in the initial neural network, a trainable target weight is added to a connection between blocks, an updated target weight is used as a basis for determining importance of the connection relationship between the blocks, and the connection relationship between the blocks is selected and removed based on the updated target weight, to search for a topology structure of the neural network.

FIG. 4

## Description

This application claims priority to Chinese Patent Application No. 202011268949.1, filed with the China National Intellectual Property Administration on November 13, 2020 and entitled "NEURAL NETWORK STRUCTURE DETERMINING METHOD AND APPARATUS THEREOF", which is incorporated herein by reference in its entirety.

## TECHNICAL FIELD

This application relates to the field of artificial intelligence, and in particular, to a neural network structure determining method and apparatus.

## BACKGROUND

Machine learning (machine learning, ML) has achieved considerable success in recent years. More products derived from the machine learning are dramatically changing people's life. However, current progress of the machine learning depends on ML experts' manual cumbersome design and debugging of models. This not only limits a wide application of the machine learning, but also prolongs a product iteration period.

With rapid development of artificial intelligence technologies, a neural network with excellent performance usually has a delicate network structure, and experts with high skills and extensive experience need to make great efforts to construct the neural network. There are many combinations of neural network structures. During manual design, a good structure is designed by searching for some rules of a high-precision network structure through a plurality of complex attempts. Typical network structures, such as AlexNet, ResNet, and DenseNet, are manually designed. Appearance of the structures greatly improves precision of various tasks.

As various technologies develop and computing resources increase, an automatic machine learning (AutoML) technology gradually replaces manual operations, to design a new network structure. The network structure is coded, performance of a large quantity of codes is evaluated, and then learning is performed according to an algorithm such as a reinforcement learning algorithm or a genetic algorithm, to finally generate an optimal code. However, in the conventional technology, only a width (quantities of input feature channels and output feature channels of an operation unit in a neural network) and a depth (a quantity of operation units included in the neural network) of the neural network can be searched for, but a topology structure of the neural network cannot be searched for.

## SUMMARY

According to a first aspect, this application provides a neural network structure determining method. The method includes:
obtaining a to-be-trained initial neural network, where the initial neural network includes M first blocks block and a second block, the block block may also be referred to as a network block, the block block may include a specific quantity of atomic operations, and the atomic operations may include but are not limited to operations such as convolution, pooling, and residual connection. The second block is connected to each first block. A connection relationship between blocks may be understood as a data transmission direction between the blocks. Specifically, a block may perform an operation corresponding to the block on input data, and obtain an operation result. The operation result may be input to a next block connected to the block, and is used as input data of the next block. In other words, that there is a connection relationship between two first blocks may indicate that an output of one block is used as an input of the other block, and each first block corresponds to one target weight. In this embodiment of this application, to determine which connections between blocks are reserved in a model training process, a trainable parameter (also referred to as a target weight in this embodiment) may be set on a connection between two blocks. An output of one block may be multiplied by a corresponding target weight (also referred to as a product operation in this embodiment), and then a result of the product operation is input into the other block. The second block is used to perform, based on M first outputs, an operation corresponding to the second block. The M first outputs each are obtained by performing a product operation on an output of each first block and the corresponding target weight. The target weight is a trainable weight, where M is an integer greater than 1. The method further includes: performing model training on the initial neural network, to obtain M updated target weights. In this embodiment of this application, a training device may perform model training on the initial neural network on a target task, update the M target weights, and obtain the M updated target weights when the M target weights are stable. That the target weights are stable may be understood as that a change of the target weight in an iterative training process is within a specific range. In some implementations, whether the M target weights are stable may be determined based on a quantity of times of iterative training. For example, the training device may perform model training on the initial neural network for a first preset quantity of iterations, to obtain the M updated target weights. The first preset quantity of iterations may be a preset value, and the preset value may be determined based on a total quantity of times of required iterative training. For example, when the quantity of times of iterative training reaches a specific percentage of the total quantity of times that training needs to be performed, it is considered that the M target weights are stable.

The method further includes: updating a connection relationship between the second block and the M first blocks in the initial neural network based on the M updated target weights, to obtain a first neural network, where the second block in the first neural network is used to perform, based on outputs of first blocks corresponding to N largest target weights in the M updated target weights, the operation corresponding to the second block, where N is less than M. Specifically, the second block in the first neural network may be used to perform, based on a summation result of the outputs of the first blocks corresponding to the N largest target weights in the M updated target weights, the operation corresponding to the second block. The M updated target weights may indicate whether a connection between blocks in which the M updated target weights each are located is important. An important determining basis is that a larger updated target weight indicates a more important connection between the blocks. Specifically, connections in which the N largest target weights in the M updated target weights are located may be reserved, and a connection in which a target weight other than the N largest target weights in the M updated target weights is located is removed.

In this embodiment, in a process of searching for a connection relationship between blocks in the initial neural network, the trainable target weight is added to the connection between blocks, an updated target weight is used as a basis for determining importance of the connection relationship between the blocks, and the connection relationship between the blocks is selected and removed based on the updated target weight, to search for a topology structure of the neural network.

In a possible implementation, the M first blocks and the second block in the initial neural network sequentially form a serial connection, the second block is an end point of the serial connection, the M first blocks in the initial neural network include a target block, the target block is connected to the second block on the serial connection, and when an updated target weight corresponding to the target block is not included in the N largest target weights in the M updated target weights, the second block in the first neural network is further used to perform, based on an output of the target block, the operation corresponding to the second block.

In other words, regardless of whether the updated target weight corresponding to the target block is in the N largest target weights in the M updated target weights, a connection between the target block and the second block is always reserved, and the connection between the target block and the second block may be referred to as a backbone connection. The backbone connection is not removed, and this can ensure that a backbone architecture of the entire neural network is not damaged. Specifically, in an implementation, if an updated target weight that belongs to the backbone connection is one of the N largest target weights in the M target weights, connections in which N updated target weights are located may be reserved; or if an updated target weight that belongs to the backbone connection is not one of the N largest target weights in the M target weights, connections in which N+1 updated target weights are located may be reserved.

In a possible implementation, N is 1.

In a possible implementation, the performing model training on the initial neural network, to obtain M updated target weights includes:

performing model training on the initial neural network for a first preset quantity of iterations, to obtain the M updated target weights.

In a possible implementation, the method further includes:

performing model training on the first neural network until data processing precision of the first neural network meets a preset condition or a quantity of iterations of model training reaches a second preset quantity of iterations, to obtain a second neural network.

In this embodiment of this application, a proportion of the first preset quantity of iterations to the second preset quantity of iterations may be preset. This means that the M updated target weights are obtained at a location of a fixed percentage of a total quantity of training rounds. This ensures stability of the target weights, and ensures that a network obtained after topology optimization is fully trained. In addition, time of optimizing a single topology is kept basically the same as original training time, to ensure search efficiency.

In a possible implementation, quantities of input channels and output channels of each of the M first blocks are the same as quantities of input channels and output channels of the second block.

In a possible implementation, the second block in the initial neural network is used to perform, based on a summation result of the M first outputs, the operation corresponding to the second block.

The second block in the first neural network is used to perform, based on a summation result of the outputs of the first blocks corresponding to the N largest target weights in the M updated target weights, the operation corresponding to the second block.

In a possible implementation, the method further includes:

obtaining to-be-trained data, where the to-be-trained data includes at least one of the following: image data, text data, and voice data; and correspondingly, the performing model training on the initial neural network includes:

performing model training on the initial neural network based on the to-be-trained data.

According to a second aspect, this application provides a neural network structure determining method. The method includes:

obtaining a to-be-trained initial neural network, where the initial neural network includes M first blocks block and a second block, the second block is connected to each first block, each first block corresponds to one target weight, each first block is used to perform, based on a corresponding first output, an operation corresponding to the first block, the first output corresponding to each first block is obtained by performing a product operation on the target weight corresponding to the first block and an output of the second block, and the target weight is a trainable weight, where M is an integer greater than 1; and a difference from the embodiment described in the first aspect is that: in the first aspect, the outputs of the M first blocks are used as the input of the second block, in a subsequent connection relationship selection process, connection relationship is also selected based on values of the M updated target weights corresponding to the M first blocks, and in this embodiment, the output of the second block is used as inputs of the M first blocks;

performing model training on the initial neural network, to obtain M updated target weights; and

updating a connection relationship between the second block and the M first blocks in the initial neural network based on the M updated target weights, to obtain a first neural network, where first blocks corresponding to N largest target weights in the M updated target weights are used to perform, based on the output of the second block, the operation corresponding to the first block, where N is less than M.

In a possible implementation, the second block and the M first blocks in the initial neural network sequentially form a serial connection, the second block is a start point of the serial connection, the M first blocks in the initial neural network include a target block, the target block is connected to the second block on the serial path, and when an updated target weight corresponding to the target block is not included in the N largest target weights in the M updated target weights, the target block in the first neural network is further used to perform, based on the output of the second block, the operation corresponding to the target block.

In this embodiment, in a process of searching for a connection relationship between blocks in the initial neural network, the trainable target weight is added to the connection between blocks, an updated target weight is used as a basis for determining importance of the connection relationship between the blocks, and the connection relationship between the blocks is selected and removed based on the updated target weight, to search for a topology structure of the neural network.

In a possible implementation, N is 1.

In a possible implementation, the performing model training on the initial neural network, to obtain M updated target weights includes:

performing model training on the initial neural network for a first preset quantity of iterations, to obtain the M updated target weights.

In a possible implementation, the method further includes:

performing model training on the first neural network until data processing precision of the first neural network meets a preset condition or a quantity of iterations of model training reaches a second preset quantity of iterations, to obtain a second neural network.

In a possible implementation, quantities of input channels and output channels of each of the M first blocks are the same as quantities of input channels and output channels of the second block.

In a possible implementation, the method further includes:

obtaining to-be-trained data, where the to-be-trained data includes at least one of the following: image data, text data, and voice data; and correspondingly, the performing model training on the initial neural network includes:

performing model training on the initial neural network based on the to-be-trained data.

According to a third aspect, this application provides a neural network structure determining method. The method includes:

obtaining a plurality of target codes, where each target code indicates one candidate neural network, the plurality of target codes include a first target code and a plurality of first codes, and the first target code indicates a first neural network. In this embodiment of this application, when a structure of a neural network is searched for, a structure feature of the neural network may be written in a form of a code. Each code indicates at least one of the following structure features of a candidate neural network: a type of an operation unit included in the candidate neural network, a quantity of operation units included in the candidate neural network, and quantities of input feature channels and output feature channels of the operation unit included in the candidate neural network. The operation unit may be each atomic operation in a block. In other words, each code indicates a type of an atomic operation included in one candidate neural network, a quantity of atomic operations included in the candidate neural network, and quantities of input feature channels and output feature channels of the atomic operation included in the candidate neural network. In a same stage, quantities of input feature channels and output feature channels of an atomic operation in each block are the same. This means that each code indicates quantities of input feature channels and output feature channels of a block included in one candidate neural network.

The method further includes: performing model training on the first neural network, to obtain data processing precision of the first neural network. In this embodiment of this application, data processing precision of the neural network may be a value of a loss function used to train the network, test precision of the neural network, or the like. This is not limited in this embodiment of this application.

In this embodiment of this application, model training is not performed on a plurality of candidate neural networks indicated by the plurality of target codes, and a candidate neural network with higher precision is selected from the plurality of candidate neural networks as a model search result based on data processing precision of the plurality of candidate neural networks. Instead, only a first neural network indicated by one target code (the first target code) in the plurality of target codes is selected, and model training is performed on the first neural network. Then data processing precision of candidate neural networks indicated by remaining target codes (a plurality of first codes) in the plurality of target codes are determined based on a difference between the target codes.

The method further includes: determining, based on a difference between the first target code and the plurality of first codes and the data processing precision of the first neural network, data processing precision of a candidate neural network indicated by each first code. In this embodiment of this application, the target code may include a plurality of bits, and each bit indicates a structure feature of the candidate neural network. To eliminate impact of a dimension difference between bits on a subsequent operation, each target code may be standardized. For example, an average value and a standard deviation of the plurality of target codes may be separately calculated for each bit of the target code, and then the average value is subtracted from each bit of the target code, and then divided by the standard deviation. Then a dimension of the target code does not affect a subsequent algorithm. In this embodiment, a Gaussian process may be used to determine, based on the difference between the first target code and the plurality of first codes and the data processing precision of the first neural network, the data processing precision of the candidate neural network indicated by each first code. Specifically, values of other sample points may be estimated based on a distance between every two sample points and values of some sample points. In this embodiment, a sample point is each target code, and a value of the sample point is the data processing precision of the candidate neural network indicated by the target code.

The method further includes: obtaining a first candidate neural network with highest data processing precision in candidate neural networks indicated by the plurality of target codes; and
performing model training on the first candidate neural network, to obtain a first target neural network.

In a possible implementation, the method further includes:

obtaining data processing precision of the first target neural network, where the plurality of target codes include a second target code, and the second target code indicates the first target neural network;
determining, based on a difference between the second target code and a code other than the second target code in the plurality of target codes and the data processing precision of the first target neural network, data processing precision of a candidate neural network indicated by each target code other than the second target code in the plurality of target codes; and
determining, based on data processing precision of the candidate neural networks indicated by the plurality of target codes, a second candidate neural network with highest data processing precision, and performing model training on the second candidate neural network, to obtain a second target neural network. Then a training device may repeat the foregoing process, and may obtain an ideal model as a neural model structure search result through a preset quantity of iterations (for example, four rounds).

In a possible implementation, each target code indicates at least one of the following structure features of a candidate neural network:
a type of an operation unit included in the candidate neural network, a quantity of operation units included in the candidate neural network, and quantities of input feature channels and output feature channels of the operation unit included in the candidate neural network.

In a possible implementation, the method further includes:
clustering a plurality of codes, to obtain a plurality of code sets, where each code set corresponds to one clustering category, the plurality of code sets include a target code set, and the target code set includes the plurality of target codes.

In a possible implementation, the first target code is a clustering center of the target code set.

In this embodiment of this application, a plurality of codes may be clustered, to obtain a plurality of code sets, each code set corresponds to one clustering category, the plurality of code sets include a target code set, and the target code set includes the plurality of target codes. The plurality of codes may be obtained after a plurality of candidate codes are screened. The first target code may be a code in the target code set. In an implementation, the first target code may be a clustering center of the target code set. The first target code indicates the first neural network. It should be understood that the clustering may be a k-means algorithm, a DBSCAN algorithm, a BIRCH algorithm, a MeanShift algorithm, or the like.

In a possible implementation, the candidate neural network indicated by each target code meets at least one of the following conditions:
A calculation amount required when the candidate neural network indicated by each target code runs is less than a first preset value.

A quantity of weights included in the candidate neural network indicated by each target code is less than a second preset value.

A running speed at which the candidate neural network indicated by each target code runs is greater than a third preset value.

In an implementation, the training device may generate a plurality of candidate codes, and screen the plurality of candidate codes based on a preset rule. The preset rule may be at least one of the following: selecting, from the plurality of candidate codes, a code indicating that a calculation amount required when the indicated candidate neural network runs is less than a first preset value, a code indicating that a quantity of weights included in the indicated candidate neural network is less than a second preset value, and a code indicating that a running speed at which the indicated candidate neural network runs is greater than a third preset value. The calculation amount may be a quantity of floating-point multiplications that need to be performed in the entire neural network, and a floating-point multiplication operation is most time-consuming. Therefore, the FLOPs may indicate the calculation amount of the neural network. The first preset value, the second preset value, and the third preset value may be preset.

In a possible implementation, the first candidate neural network includes M first blocks block and a second block. The second block is connected to each first block, and each first block corresponds to one target weight. The first candidate neural network is used to perform a product operation on an output of each first block and the corresponding target weight, to obtain M first outputs, the second block is used to perform, based on the M first outputs, an operation corresponding to the second block, and the target weight is a trainable weight, where M is an integer greater than 1.

The performing model training on the first candidate neural network, to obtain a first target neural network includes:

performing model training on the first candidate neural network, to obtain M updated target weights;

updating a connection relationship between the second block and the M first blocks in the first candidate neural network based on the M updated target weights, to obtain a second neural network, where the second block in the second neural network is used to perform, based on outputs of first blocks corresponding to N largest target weights in the M updated target weights, the operation corresponding to the second block, where N is less than M; and

performing model training on the second neural network, to obtain the first target neural network.

In a possible implementation, the first candidate neural network includes M first blocks block and a second block. The second block is connected to each first block, and each first block corresponds to one target weight. The first candidate neural network is used to perform a product operation on an output of the second block and each target weight, to obtain M first outputs, each first block is used to perform, based on a corresponding first output, an operation corresponding to the first block, and the target weight is a trainable weight, where M is an integer greater than 1.

The performing model training on the first candidate neural network, to obtain a first target neural network includes:

performing model training on the first candidate neural network, to obtain M updated target weights;

updating a connection relationship between the second block and the M first blocks in the first candidate neural network based on the M updated target weights, to obtain a second neural network, where first blocks corresponding to N largest target weights in the M updated target weights are used to perform, based on the output of the second block, the operation corresponding to the first block, where N is less than M; and

performing model training on the second neural network, to obtain the first target neural network.

According to a fourth aspect, this application provides a neural network structure determining apparatus. The apparatus includes:

an obtaining module, configured to obtain a to-be-trained initial neural network, where the initial neural network includes M first blocks block and a second block, the second block is connected to each first block, each first block corresponds to one target weight, the second block is used to perform, based on M first outputs, an operation corresponding to the second block, the M first outputs each are obtained by performing a product operation on an output of each first block and the corresponding target weight, and the target weight is a trainable weight, where M is an integer greater than 1;

a model training module, configured to perform model training on the initial neural network, to obtain M updated target weights; and

a model updating module, configured to update a connection relationship between the second block and the M first blocks in the initial neural network based on the M updated target weights, to obtain a first neural network, where the second block in the first neural network is used to perform, based on outputs of first blocks corresponding to N largest target weights in the M updated target weights, the operation corresponding to the second block, where N is less than M.

In a possible implementation, the M first blocks and the second block in the initial neural network sequentially form a serial connection, the second block is an end point of the serial connection, the M first blocks in the initial neural network include a target block, the target block is connected to the second block on the serial connection, and when an updated target weight corresponding to the target block is not included in the N largest target weights in the M updated target weights, the second block in the first neural network is further used to perform, based on an output of the target block, the operation corresponding to the second block.

In a possible implementation, N is 1.

In a possible implementation, the model training module is configured to perform model training on the initial neural network for a first preset quantity of iterations, to obtain the M updated target weights.

In a possible implementation, the model training module is configured to perform model training on the first neural network until data processing precision of the first neural network meets a preset condition or a quantity of iterations of model training reaches a second preset quantity of iterations, to obtain a second neural network.

In a possible implementation, quantities of input channels and output channels of each of the M first blocks are the same as quantities of input channels and output channels of the second block.

In a possible implementation, the second block in the initial neural network is used to perform, based on a summation result of the M first outputs, the operation corresponding to the second block.

The second block in the first neural network is used to perform, based on a summation result of the outputs of the first blocks corresponding to the N largest target weights in the M updated target weights, the operation corresponding to the second block.

In a possible implementation, the obtaining module is configured to obtain to-be-trained data, and the to-be-trained data includes at least one of the following: image data, text data, and voice data. Correspondingly, performing model training on the initial neural network includes:

The model training module is configured to perform model training on the initial neural network based on the to-be-trained data.

According to a fifth aspect, this application provides a neural network structure determining apparatus. The apparatus includes:

an obtaining module, configured to obtain a to-be-trained initial neural network, where the initial neural network includes M first blocks block and a second block, the second block is connected to each first block, each first block corresponds to one target weight, each first block is used to perform, based on a corresponding first output, an operation corresponding to the first block, the first output corresponding to each first block is obtained by performing a product operation on the target weight corresponding to the first block and an output of the second block, and the target weight is a trainable weight, where M is an integer greater than 1;

a model training module, configured to perform model training on the initial neural network, to obtain M updated target weights; and

a model updating module, configured to update a connection relationship between the second block and the M first blocks in the initial neural network based on the M updated target weights, to obtain a first neural network, where first blocks corresponding to N largest target weights in the M updated target weights are used to perform, based on the output of the second block, the operation corresponding to the first block, where N is less than M.

In a possible implementation, the second block and the M first blocks in the initial neural network sequentially form a serial connection, the second block is a start point of the serial connection, the M first blocks in the initial neural network include a target block, the target block is connected to the second block on the serial path, and when an updated target weight corresponding to the target block is not included in the N largest target weights in the M updated target weights, the target block in the first neural network is further used to perform, based on the output of the second block, the operation corresponding to the target block.

In a possible implementation, N is 1.

In a possible implementation, the model training module is configured to perform model training on the initial neural network for a first preset quantity of iterations, to obtain the M updated target weights.

In a possible implementation, the model training module is configured to perform model training on the first neural network until data processing precision of the first neural network meets a preset condition or a quantity of iterations of model training reaches a second preset quantity of iterations, to obtain a second neural network.

In a possible implementation, quantities of input channels and output channels of each of the M first blocks are the same as quantities of input channels and output channels of the second block.

In a possible implementation, the obtaining module is configured to obtain to-be-trained data, and the to-be-trained data includes at least one of the following: image data, text data, and voice data. Correspondingly, performing model training on the initial neural network includes:

The model training module is configured to perform model training on the initial neural network based on the to-be-trained data.

According to a sixth aspect, this application provides a neural network structure determining apparatus. The apparatus includes:

an obtaining module, configured to obtain a plurality of target codes, where each target code indicates one candidate neural network, the plurality of target codes include a first target code and a plurality of first codes, and the first target code indicates a first neural network;
a model training module, configured to perform model training on the first neural network, to obtain data processing precision of the first neural network; and
a precision determining module, configured to determine, based on a difference between the first target code and the plurality of first codes and the data processing precision of the first neural network, data processing precision of a candidate neural network indicated by each first code.

The obtaining module is configured to obtain a first candidate neural network with highest data processing precision in candidate neural networks indicated by the plurality of target codes.

The model training module is configured to perform model training on the first candidate neural network, to obtain a first target neural network.

In a possible implementation, the obtaining module is configured to: obtain data processing precision of the first target neural network, where the plurality of target codes include a second target code, and the second target code indicates the first target neural network;

determine, based on a difference between the second target code and a code other than the second target code in the plurality of target codes and the data processing precision of the first target neural network, data processing precision of a candidate neural network indicated by each target code other than the second target code in the plurality of target codes; and
determine, based on data processing precision of the candidate neural networks indicated by the plurality of target codes, a second candidate neural network with highest data processing precision, and perform model training on the second candidate neural network, to obtain a second target neural network.

In a possible implementation, each target code indicates at least one of the following structure features of a candidate neural network:

a type of an operation unit included in the candidate neural network, a quantity of operation units included in the candidate neural network, and quantities of input feature channels and output feature channels of the operation unit included in the candidate neural network.

In a possible implementation, the apparatus further includes:

a clustering module, configured to cluster a plurality of codes, to obtain a plurality of code sets, where each code set corresponds to one clustering category, the plurality of code sets include a target code set, and the target code set includes the plurality of target codes.

In a possible implementation, the first target code is a clustering center of the target code set.

In a possible implementation, the candidate neural network indicated by each target code meets at least one of the following conditions:

A calculation amount required when the candidate neural network indicated by each target code runs is less than a first preset value.

A quantity of weights included in the candidate neural network indicated by each target code is less than a second preset value.

A running speed at which the candidate neural network indicated by each target code runs is greater than a third preset value.

In a possible implementation, the first candidate neural network includes M first blocks block and a second block, the second block is connected to each first block, each first block corresponds to one target weight, the second block is used to perform, based on M first outputs, an operation corresponding to the second block, the M first outputs each are obtained by performing a product operation on an output of each first block and the corresponding target weight, and the target weight is a trainable weight, where M is an integer greater than 1.

The model training module is configured to: perform model training on the first candidate neural network, to obtain M updated target weights;

update a connection relationship between the second block and the M first blocks in the first candidate neural network based on the M updated target weights, to obtain a second neural network, where the second block in the second neural network is used to perform, based on outputs of first blocks corresponding to N largest target weights in the M updated target weights, the operation corresponding to the second block, where N is less than M; and

perform model training on the second neural network, to obtain the first target neural network.

In a possible implementation, the first candidate neural network includes M first blocks block and a second block, the second block is connected to each first block, each first block corresponds to one target weight, each first block is used to perform, based on a corresponding first output, an operation corresponding to the first block, the first output corresponding to each first block is obtained by performing a product operation on the target weight corresponding to the first block and an output of the second block, and the target weight is a trainable weight, where M is an integer greater than 1.

The model training module is configured to: perform model training on the first candidate neural network, to obtain M updated target weights;

update a connection relationship between the second block and the M first blocks in the first candidate neural network based on the M updated target weights, to obtain a second neural network, where first blocks corresponding to N largest target weights in the M updated target weights are used to perform, based on the output of the second block, the operation corresponding to the first block, where N is less than M; and

perform model training on the second neural network, to obtain the first target neural network.

According to a seventh aspect, an embodiment of this application provides a neural network structure determining apparatus. The neural network structure determining apparatus may include a memory, a processor, and a bus system. The memory is configured to store a program, and the processor is configured to execute the program in the memory, to perform the method in any one of the first aspect and the optional implementations of the first aspect.

According to an eighth aspect, an embodiment of this application provides a neural network training apparatus. The neural network training apparatus may include a memory, a processor, and a bus system. The memory is configured to store a program, and the processor is configured to execute the program in the memory, to perform the method in any one of the second aspect and the optional implementations of the first aspect.

According to a ninth aspect, an embodiment of this application provides a neural network training apparatus. The neural network training apparatus may include a memory, a processor, and a bus system. The memory is configured to store a program, and the processor is configured to execute the program in the memory, to perform the method in any one of the third aspect and the optional implementations of the first aspect.

According to a tenth aspect, an embodiment of this application provides a computer-readable storage medium. The computer-readable storage medium stores a computer program, and when the computer program runs on a computer, the computer is enabled to perform the method in any one of the first aspect and the optional implementations of the first aspect.

According to an eleventh aspect, an embodiment of this application provides a computer-readable storage medium. The computer-readable storage medium stores a computer program, and when the computer program runs on a computer, the computer is enabled to perform the method in any one of the second aspect and the optional implementations of the second aspect.

According to a twelfth aspect, an embodiment of this application provides a computer-readable storage medium. The computer-readable storage medium stores a computer program, and when the computer program runs on a computer, the computer is enabled to perform the method in any one of the third aspect and the optional implementations of the third aspect.

According to a thirteenth aspect, an embodiment of this application provides a computer program. When the computer program runs on a computer, the computer is enabled to perform the method in any one of the first aspect and the optional implementations of the first aspect.

According to a fourteenth aspect, an embodiment of this application provides a computer program. When the computer program runs on a computer, the computer is enabled to perform the method in any one of the second aspect and the optional implementations of the second aspect.

According to a fifteenth aspect, an embodiment of this application provides a computer program. When the computer program runs on a computer, the computer is enabled to perform the method in any one of the third aspect and the optional implementations of the third aspect.

According to a sixteenth aspect, an embodiment of this application provides a computer program product, including a code. When the code is executed, the code is used to perform the method in any one of the first aspect and the optional implementations of the first aspect.

According to a seventeenth aspect, an embodiment of this application provides a computer program product, including a code. When the code is executed, the code is used to perform the method in any one of the second aspect and the optional implementations of the second aspect.

According to an eighteenth aspect, an embodiment of this application provides a computer program product, including a code. When the code is executed, the code is used to perform the method in any one of the third aspect and the optional implementations of the third aspect.

According to a nineteenth aspect, this application provides a chip system. The chip system includes a processor, configured to support an execution device or a training device in implementing functions in the foregoing aspects, for example, sending or processing data or information in the foregoing methods. In a possible design, the chip system further includes a memory. The memory is configured to store program instructions and data that are necessary for the execution device or the training device. The chip system may include a chip, or may include a chip and another discrete component.

An embodiment of this application provides a neural network structure determining method. The method includes: obtaining a to-be-trained initial neural network, where the initial neural network includes M first blocks block and a second block, the second block is connected to each first block, each first block corresponds to one target weight, the second block is used to perform, based on M first outputs, an operation corresponding to the second block, the M first outputs each are obtained by performing a product operation on an output of each first block and the corresponding target weight, and the target weight is a trainable weight, where M is an integer greater than 1; performing model training on the initial neural network, to obtain M updated target weights; and updating a connection relationship between the second block and the M first blocks in the initial neural network based on the M updated target weights, to obtain a first neural network, where the second block in the first neural network is used to perform, based on outputs of N first blocks corresponding to N largest target weights in the M updated target weights, the operation corresponding to the second block, where N is less than M. According to the foregoing method, in a process of searching for a connection relationship between blocks in the initial neural network, the trainable target weight is added to a connection between blocks, an updated target weight is used as a basis for determining importance of the connection relationship between the blocks, and the connection relationship between the blocks is selected and removed based on the updated target weight, to search for a topology structure of the neural network.

## BRIEF DESCRIPTION OF DRAWINGS

FIG. 1 is a schematic diagram of a structure of an artificial intelligence main framework;

FIG. 2 shows an application scenario according to an embodiment of this application;

FIG. 3 is a schematic diagram of a system architecture according to an embodiment of this application;

FIG. 4 is a schematic flowchart of a neural network structure determining method according to an embodiment of this application;

FIG. 5a is a schematic diagram of a neural network structure determining method according to an embodiment of this application;

FIG. 5b is a schematic diagram of a neural network structure determining method according to an embodiment of this application;

FIG. 5c is a schematic diagram of a neural network structure determining method according to an embodiment of this application;

FIG. 6 is a schematic diagram of a neural network structure determining method according to an embodiment of this application;

FIG. 7 is a schematic diagram of a neural network structure determining method according to an embodiment of this application;

FIG. 8 is a schematic diagram of a neural network structure determining method according to an embodiment of this application;

FIG. 9 is a schematic diagram of a neural network structure determining method according to an embodiment of this application;

FIG. 10 is a schematic flowchart of a neural network structure determining method according to an embodiment of this application;

FIG. 11 is a schematic diagram of a neural network structure determining method according to an embodiment of this application;

FIG. 12 is a schematic diagram of a neural network structure determining method according to an embodiment of this application;

FIG. 13 is a schematic diagram of a neural network structure determining method according to an embodiment of this application;

FIG. 14 is a schematic flowchart of a neural network structure determining method according to an embodiment of this application;

FIG. 15 is a schematic diagram of a neural network structure determining apparatus according to an embodiment of this application;

FIG. 16 is a schematic diagram of a neural network structure determining apparatus according to an embodiment of this application;

FIG. 17 is a schematic diagram of a neural network structure determining apparatus according to an embodiment of this application;

FIG. 18 is a schematic diagram of a neural network structure determining apparatus according to an embodiment of this application;

FIG. 19 is a schematic diagram of a structure of an execution device according to an embodiment of this application;

FIG. 20 is a schematic diagram of a structure of a training device according to an embodiment of this application; and

FIG. 21 is a schematic diagram of a structure of a chip according to an embodiment of this application.

## DESCRIPTION OF EMBODIMENTS

The following describes embodiments of the present invention with reference to accompanying drawings in embodiments of the present invention. Terms used in embodiments of the present invention are merely intended to explain specific embodiments of the present invention, and are not intended to limit the present invention.

The following describes embodiments of this application with reference to the accompanying drawings. A person of ordinary skill in the art may learn that, with development of technologies and emergence of a new scenario, the technical solutions provided in embodiments of this application are also applicable to a similar technical problem.

In the specification, claims, and the accompanying drawings of this application, terms "first", "second", and the like are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, terms "include", "have" and any other variants thereof mean to cover the non-exclusive inclusion, so that a process, method, system, product, or device that includes a series of units is not necessarily limited to those units, but may include other units not expressly listed or inherent to such a process, method, product, or device.

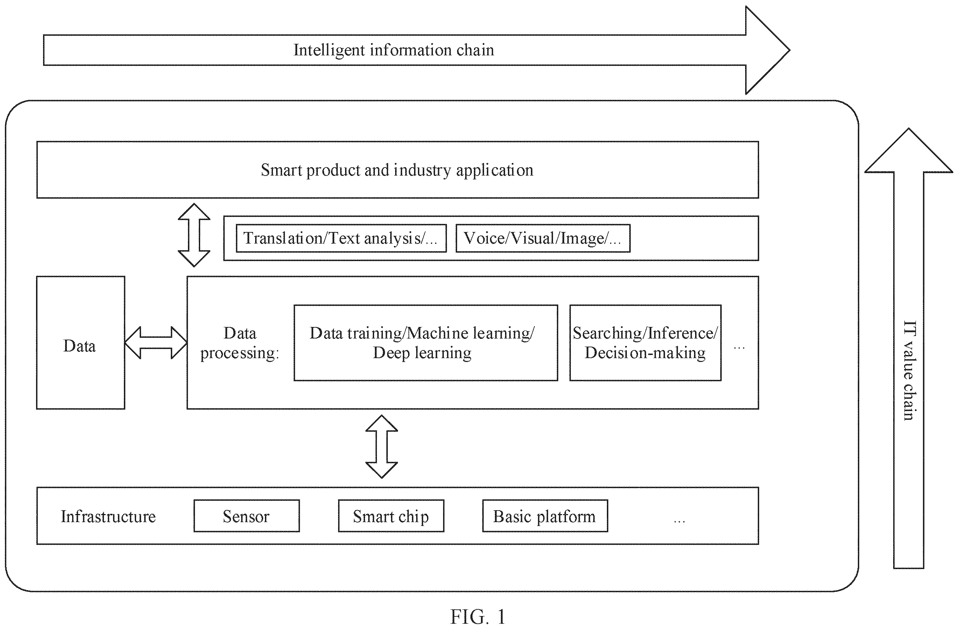

An overall working procedure of an artificial intelligence system is first described. FIG. 1 shows a schematic diagram of a structure of an artificial intelligence main framework. The following describes the artificial intelligence main framework from two dimensions: an "intelligent information chain" (horizontal axis) and an "IT value chain" (vertical axis). The "intelligent information chain" reflects a series of processes from obtaining data to processing the data. For example, the process may be a general process of intelligent information perception, intelligent information representation and formation, intelligent inference, intelligent decision-making, and intelligent execution and output. In this process, the data undergoes a refinement process of "data-information-knowledge-intelligence". The "IT value chain" reflects a value brought by artificial intelligence to an information technology industry from an underlying infrastructure and information (technology providing and processing implementation) of human intelligence to an industrial ecological process of a system.

(1) Infrastructure

The infrastructure provides computing capability support for an artificial intelligence system, implements communication with the external world, and implements support by using a basic platform. The infrastructure communicates with the outside by using a sensor. A computing capability is provided by a smart chip (a hardware acceleration chip such as a CPU, an NPU, a GPU, an ASIC, or an FPGA). The basic platform includes related platforms, for example, a distributed computing framework and a network, for assurance and support, including cloud storage and computing, an interconnection network, and the like. For example, the sensor communicates with the outside to obtain data, and the data is provided to a smart chip in a distributed computing system provided by the basic platform for computing.

(2) Data

The data at an upper layer of an infrastructure indicates a data source in the field of artificial intelligence. The data relates to a graph, an image, speech, and text, further relates to Internet of things data of a conventional device, and includes service data of an existing system and perception data such as force, displacement, a liquid level, a temperature, and humidity.

(3) Data processing

The data processing usually includes a manner such as data training, machine learning, deep learning, searching, inference, or decision-making.

Machine learning and deep learning may mean performing symbolic and formalized intelligent information modeling, extraction, preprocessing, training, and the like on data.

Inference is a process in which a human intelligent inference manner is simulated in a computer or an intelligent system, and machine thinking and problem resolving are performed based on formal information according to an inference control policy. A typical function is searching and matching.

Decision-making is a process in which a decision is made after intelligent information is inferred, and usually provides functions such as classification, ranking, and prediction.

(4) General capability

After data processing mentioned above is performed on data, some general capabilities may further be formed based on a data processing result, for example, an algorithm or a general system, such as translation, text analysis, computer vision processing, speech recognition, and image recognition.

(5) Smart product and industry application

The smart product and industry application are a product and an application of an artificial intelligence system in various fields, and are package of an overall solution of artificial intelligence, so that decision-making for intelligent information is productized and an application is implemented. Application fields mainly include a smart terminal, smart transportation, smart health care, autonomous driving, a smart city, and the like.

Embodiments of this application may be applied to scenarios such as image classification, object detection, semantic segmentation, room layout (room layout), image supplementation, or automatic coding.

The following briefly describes an application scenario of this application by using two application scenarios as examples: an ADAS/ADS visual perception system and mobile phone beautification.

Application scenario 1: ADAS/ADS visual perception system

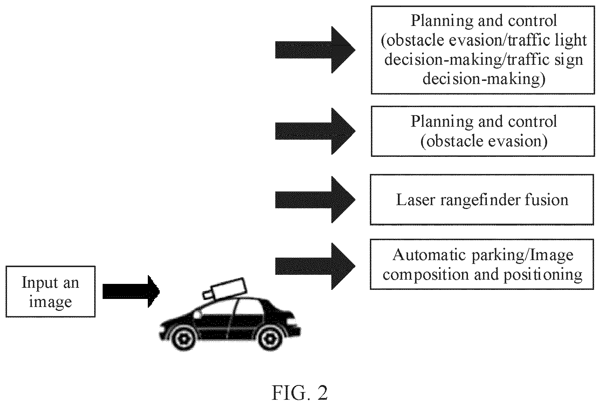

As shown in FIG. 2, in an ADAS and an ADS, a plurality of types of 2D target detection need to be performed in real time, including detection on a dynamic obstacle (pedestrian (Pedestrian), a cyclist (Cyclist), a tricycle (Tricycle), a car (Car), a truck (Truck), and a bus (Bus)), a static obstacle (a traffic cone (TrafficCone), a traffic stick (TrafficStick), a fire hydrant (FireHydrant), a motocycle (Motocycle), a bicycle (Bicycle)), a traffic sign (TrafficSign), a guide sign (GuideSign), a billboard (Billboard), a red traffic light (TrafficLight_Red)/a yellow traffic light (TrafficLight_Yellow)/a green traffic light (TrafficLight_Green)/a black traffic light (TrafficLight_Black), and a road sign (RoadSign)). In addition, to accurately obtain a region occupied by the dynamic obstacle in three-dimensional space, 3D estimation further needs to be performed on the dynamic obstacle, to output a 3D box. To integrate with data of a laser radar, a mask of the dynamic obstacle needs to be obtained, to filter out laser point clouds that hit the dynamic obstacle. To accurately locate a parking space, four key points of the parking space need to be detected at the same time. For image composition positioning, key points of a static obstacle need to be detected. By using technical solutions provided in embodiments of this application, all or a part of the foregoing functions may be completed in a neural network.

Application scenario 2: beautification function of a mobile phone

In a mobile phone, a mask and key points of a human body are detected by using a neural network provided in embodiments of this application, and a corresponding part of the human body may be zoomed in or zoomed out, for example, a waist and a hip beauty operation, to output a beautified image.

Application scenario 3: image classification scenario

After a to-be-classified image is obtained, a category of an object in the to-be-classified image may be obtained based on a neural network, and then the to-be-classified image may be classified based on the category of the object in the to-be-classified image. A photographer takes many photos every day, such as photos of animals, photos of people, and photos of plants. According to the method in this application, photos can be quickly classified based on content in the photos, and may be classified into photos including animals, photos including people, and photos including plants.

When there are a large quantity of images, efficiency of manual classification is low, and a person is prone to be tired when processing a same thing for a long time. In this case, a classification result has a big error. However, according to the method in this application, the images can be quickly classified without an error.

Application scenario 4: commodity classification

After an image that includes a commodity is obtained, a category of the commodity in the commodity image may be obtained through neural network processing, and then the commodity is classified based on the category of the commodity. For a variety of commodities in a large shopping mall or a supermarket, the commodities can be quickly classified according to an object recognition method in this application, to reduce time overheads and labor costs.

In this embodiment of this application, a structure search of a neural network may be performed, and a neural network obtained through searching may be trained. Task processing in the foregoing several scenarios may be performed on a trained neural network.

Because embodiments of this application relate to massive application of the neural network, for ease of understanding, the following first describes terms and concepts related to the neural network in embodiments of this application.

1. Object detection

The object detection may determine a category of an image object by using related methods such as image processing, machine learning, and computer graphics, and determine a detection box used to position the object.

2. Convolutional Neural Network (Convosutionas Neuras Network, CNN)

The convolutional Neural Network is a deep neural network with a convolutional structure. The convolutional neural network includes a feature extractor including a convolutional layer and a sub-sampling layer. The feature extractor may be considered as a filter. A perception network in this embodiment may include the convolutional neural network, and the convolutional neural network is used to perform convolution on an image or perform convolution on a feature map, to generate a feature map.

3. Back propagation algorithm

The convolutional neural network may correct a value of a parameter in an initial super-resolution model in a training process based on an error back propagation (back propagation, BP) algorithm, so that an error loss of reconstructing a super-resolution model becomes smaller Specifically, an input signal is transferred forward until an error loss occurs at an output, and the parameter in the initial super-resolution model is updated based on back propagation error loss information, to make the error loss converge. The back propagation algorithm is an error-loss-centered back propagation motion intended to obtain a parameter, such as a weight matrix, of an optimal super-resolution model. In this embodiment, when a perception network is trained, the perception network may be updated based on the back propagation algorithm.

3. Feature map (Feature Map): Input data, output data, intermediate result data, and the like of a neural network each may be referred to as a feature map. In the neural network, data exists in a three-dimensional form (a length, a width, and a quantity of channels), and can be considered as a plurality of two-dimensional images stacked together.

4. Network block block: Design of a neural network usually includes two steps. A first step is to design a block. The block is a unit includes an atom unit (such as a convolution operation or a pooling operation). A second step is to combine blocks into a complete network structure.

5. Channel (channel): The channel is a third dimension in a feature map except a length and a width. The channel may be understood as a thickness of the feature map. In addition, for an atomic operation such as a convolutional layer, there is also a dimension of a quantity of channels.

6. Block width: For a block, a topology relationship of internal atom units of the block is fixed, but quantities of input feature channels and output feature channels of the atom unit are not fixed. This is a variable attribute of the block, and is referred to as the block width.

7. Network width: A set of widths of all blocks in a neural network is referred to as a width of the network, and is usually a group of integers.

8. Network depth: The network depth is a quantity of stacked blocks when blocks are stacked to form a neural network. The network depth is positively correlated with a convolutional stacking depth of the network.

9. Network stage (stage): In a neural network, an input feature map is gradually reduced through down-sampling for a plurality of times. A network stage is formed between two times of down-samplings. Generally, blocks in a network stage have a same width.

10. Network structure code: In the present invention, a depth and width of a network form a network structure code. After a topology structure is determined, the network structure code can uniquely determine a network structure. A quantity of bits of the network structure code is usually the same as a quantity of network stages.

11. Network structure code candidate set: In the present invention, a set of network structure codes that may meet a requirement is referred to as a candidate set.

12. Network calculation amount (that is, FLOPs): The network calculation amount is a quantity of floating-point multiplications that need to be performed in an entire network. This part is most time-consuming. Therefore, the FLOPs indicates a calculation amount of the network.

13. Weighted summation: When outputs of different atomic operations are aggregated, feature maps of a same shape may be summed or stacked. In the present invention, summation is always used. However, in summation, each input is multiplied by a learnable weight. This is weighted summation.

14. Data processing performance of a network: The data processing performance of the network is an indicator that indicates quality of the neural network, for example, precision of the network in a test set and a loss function value in a training set. This is manually specified based on a service requirement.

15. Target task: The target task is a final task to be resolved, and exists relative to an agent task. For example, image classification is performed on an ImageNet dataset, and facial recognition is performed on a service dataset.

16. Agent task: When AutoML optimizes a network structure, it needs to evaluate performance of a large quantity of networks. If training or testing is directly performed on a target task, resource consumption becomes unacceptable. Therefore, a smaller task is manually designed, to quickly complete network training and testing. This is an agent task.

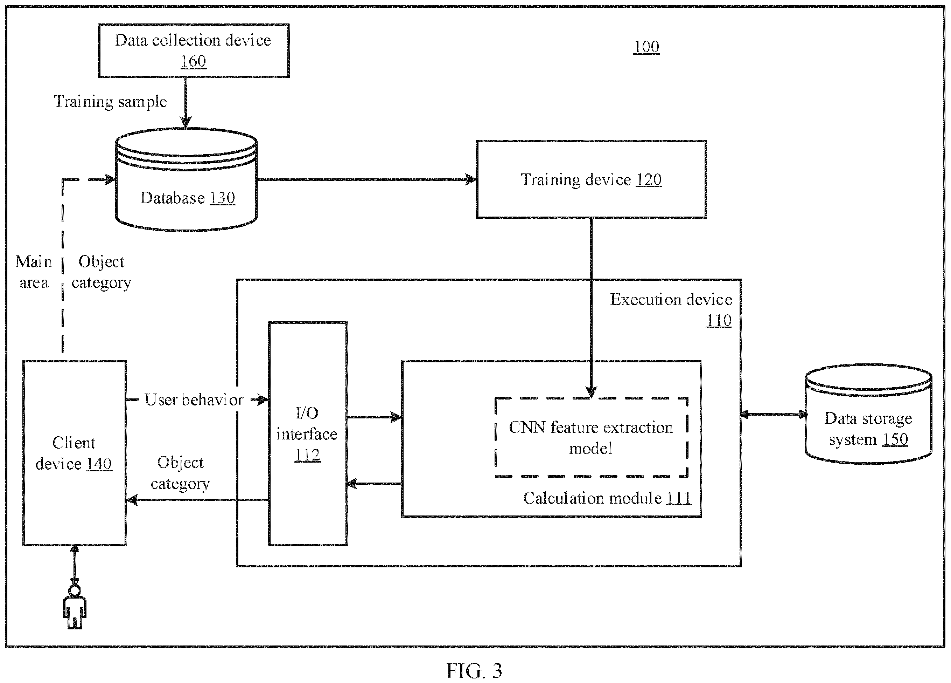

FIG. 3 is a schematic diagram of a system architecture according to an embodiment of this application. In FIG. 3, an input/output (input/output, I/O) interface 112 is configured on an execution device 110, and is configured to exchange data with an external device. A user may input data to the I/O interface 112 by using a client device 140.

In a process in which the execution device 120 preprocesses the input data, or in a process in which a calculation module 111 of the execution device 120 performs related processing such as calculation (for example, implements a function of a neural network in this application), the execution device 120 may invoke data, a code, and the like in a data storage system 150 for corresponding processing, and may also store data, instructions, and the like obtained through corresponding processing into the data storage system 150.

Finally, the I/O interface 112 returns a processing result to the client device 140, and provides the processing result to the user.

Optionally, the client device 140 may be, for example, a control unit in an autonomous driving system or a function algorithm module in a mobile phone terminal. For example, the function algorithm module may be configured to implement a related task.

It should be noted that a training device 120 may generate corresponding target models/rules for different targets or different tasks based on different training data. The corresponding target models/rules may be used to implement the foregoing targets or complete the foregoing tasks, to provide a required result for the user

In a case shown in FIG. 3, the user may manually provide the input data, and the input data may be manually provided on an interface provided by the I/O interface 112. In another case, the client device 140 may automatically send the input data to the I/O interface 112. If it is required that the client device 140 needs to obtain authorization from the user, to automatically send the input data, the user may set corresponding permission on the client device 140. The user may view, on the client device 140, a result output by the execution device 110. Specifically, the result may be presented in a form of displaying, a sound, an action, or the like. The client device 140 may alternatively be used as a data collection end, to collect, as new sample data, the input data that is input to the I/O interface 112 and the output result that is output from the I/O interface 112 that are shown in the figure, and store the new sample data in a database 130. It is clear that the client device 140 may alternatively not perform collection. Instead, the I/O interface 112 directly stores, in the database 130 as new sample data, the input data input to the I/O interface 112 and the output result output from the I/O interface 112.

It should be noted that FIG. 3 is merely a schematic diagram of the system architecture according to an embodiment of this application. A location relationship between a device, a component, a module, and the like shown in the figure constitutes no limitation. For example, in FIG. 3, the data storage system 150 is an external memory relative to the execution device 110. In another case, the data storage system 150 may alternatively be disposed in the execution device 110.

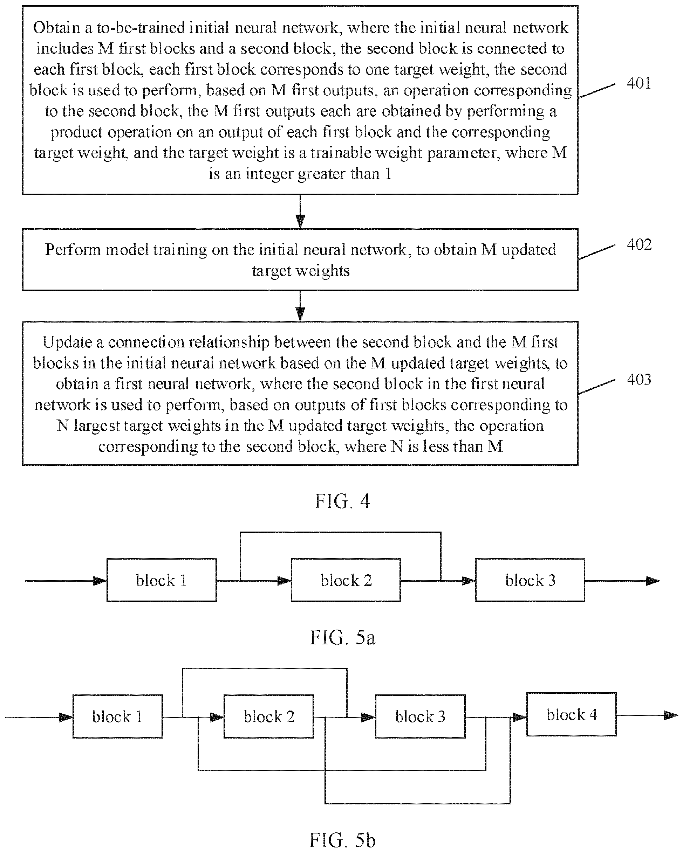

FIG. 4 is a schematic flowchart of a neural network structure determining method according to an embodiment of this application. As shown in FIG. 4, the neural network structure determining method provided in this embodiment of this application includes the following steps.

401: Obtain a to-be-trained initial neural network, where the initial neural network includes M first blocks block and a second block, the second block is connected to each first block, each first block corresponds to one target weight, the second block is used to perform, based on M first outputs, an operation corresponding to the second block, the M first outputs each are obtained by performing a product operation on an output of each first block and the corresponding target weight, and the target weight is a trainable weight, where M is an integer greater than 1.

In this embodiment of this application, a topology structure of a neural network may be searched for The topology structure of the neural network in this embodiment may be specifically a connection relationship between blocks block in the neural network.

The block block may also be referred to as a network block. The block block may include a specific quantity of atomic operations. The atomic operations may include but are not limited to operations such as convolution, pooling, and residual connection, for example, may include the following operation types: $1 \times 3$ and $3 \times 1$ convolution, $1 \times 7$ and $7 \times 1$ convolution, $3 \times 3$ dilated convolution, $3 \times 3$ average pooling, $3 \times 3$ max pooling, $5 \times 5$ max pooling, $7 \times 7$ max pooling, $1 \times 1$ convolution, $3 \times 3$ convolution, $3 \times 3$ separable conv, $5 \times 5$ separable conv, $7 \times 7$ separable conv, skip connection operation, zero operation (Zero, each neuron at a corresponding position is set to zero), and the like. For example, $3 \times 3$ average pooling indicates average pooling with a pooling kernel size $3 \times 3$; $3 \times 3$ max pooling indicates maximum pooling with a pooling kernel size $3 \times 3$; $3 \times 3$ dilated convolution indicates dilated convolution with a convolution kernel size $3 \times 3$ and a dilation rate 2; and $3 \times 3$ separable conv indicates separate convolution with a convolution kernel size $3 \times 3$; and $5 \times 5$ separable conv indicates separable convolution with a convolution kernel size $5 \times 5$.

Design of the neural network is usually divided into two steps. A first step is to design a block block, and a second step is to connect blocks, to form a complete network structure.

In this embodiment of this application, the connection relationship between blocks may be understood as a data transmission direction between blocks. Specifically, a block may perform an operation corresponding to the block on input data, and obtain an operation result. The operation result may be input to a next block connected to the block, and is used as input data of the next block. In other words, that there is a connection relationship between two first blocks may indicate that an output of one block is used as an input of the other block.

In this embodiment of this application, to search for the topology structure of the neural network, a large quantity of blocks in a to-be-searched neural network are first connected, and which connections may be reserved and which connections may be removed are determined in a model training process.

The following first describes how to connect blocks in the to-be-searched neural network.

In some scenarios, after weights are determined, such as a specific type of a block in the neural network or a type of an atomic operation included in the block, a width of the network or quantities of input feature channels and output feature channels of each atomic operation of the block, and a depth of the network or a quantity of blocks included in the neural network, all or some blocks in the neural network may be connected in pairs.

In an implementation, all or some blocks in a same stage in the neural network may be connected in pairs. In the neural network, an input feature map is gradually reduced through down-sampling for a plurality of times. A stage of the neural network is formed between two times of down-sampling. Generally, blocks in a stage of the neural network have a same width (quantities of input feature channels and output feature channels of each atomic operation of the block).

In an implementation, all blocks in a same stage in the neural network may be connected in pairs. For example, as shown in FIG. 5a, a block 1, a block 2, and a block 3 are blocks in a same stage in the neural network, the block 1 is connected to the block 2, the block 2 is connected to the block 3, and the block 1 is connected to the block 3. For example, as shown in FIG. 5b, a block 1, a block 2, a block 3, and a block 4 are blocks in a same stage in the neural network. The block 1 is connected to the block 2, the block 2 is connected to the block 3, the block 1 is connected to the block 3, the block 2 is connected to the block 4, the block 1 is connected to the block 4, and the block 3 is connected to the block 4.

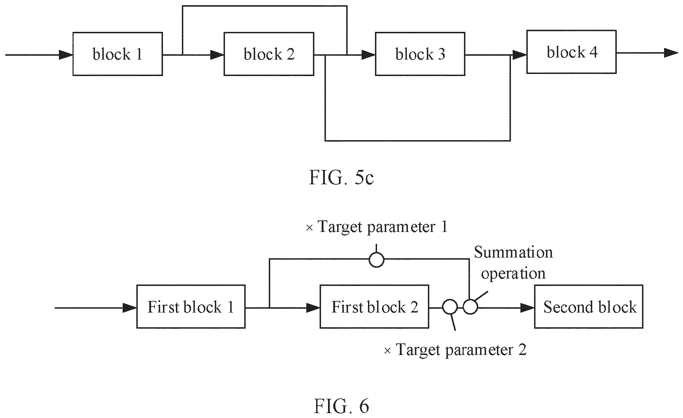

In an implementation, some blocks in a same stage in the neural network may be connected. For example, as shown in FIG. 5c, a block 1, a block 2, a block 3, and a block 4 are blocks in a same stage in the neural network. The block 1 is connected to the block 2, the block 2 is connected to the block 3, the block 1 is connected to the block 3, the block 2 is connected to the block 4, the block 3 is connected to the block 4, and the block 1 and the block 4 are not connected. It should be noted that, although it may be considered that there is no connection relationship between the block 1 and the block 4, there may be another data path between the block 1 and the block 4. For example, an output of the block 1 may be used as an input of the block 2, and an output of the block 2 may be used as an input of the block 4. Even if there is a data path block 1 -block 1-block 1 between the block 1 and the block 4, it is still considered that there is no connection relationship between the block 1 and the block 4 in this embodiment.

In this embodiment of this application, to determine which connections between blocks are reserved in the model training process, a trainable parameter (also referred to as a target weight in this embodiment) may be set on a connection between two blocks. An output of one block may be multiplied by a corresponding target weight (also referred to as a product operation in this embodiment), and then a result of the product operation is input into the other block. More specifically, for example, a target weight 1 is set between the block 1 and the block 2. When the target weight 1 is not set, the output of the block 1 is directly used as the input of the block 2. When the target weight 1 is set, the product operation is first performed on the output of the block 1 and the target weight 1, and then a result of the product operation is used as an input of the block 2. In the model training process, as training iteration is performed, each target weight is updated, and an updated target weight may indicate whether a connection in which the target weight is located is important.

It should be understood that, when there a connection relationship between a same block and a plurality of blocks, for example, outputs of the plurality of blocks are simultaneously used as an input of the one block, after the product operation is performed on the outputs of the plurality of blocks and corresponding target weights, results of the product operation may be added, and a summation result is used as the input of the block connected to the plurality of blocks. For example, as shown in FIG. 6, both a first block 1 and a first block 2 are connected to the second block, an output of the first block 1 is multiplied by a target weight 1, an output of the first block 2 is multiplied by a target weight 2, a summation operation may be performed on two multiplication results, and a result of the two summation operations may be used as an input of the second block.

In this embodiment of this application, a training device may obtain the to-be-trained initial neural network. The to-be-trained initial neural network may be obtained by connecting all or some blocks in the neural network in pairs after the weights such as the specific type of the block in the neural network and the width and the depth of the network are determined.

The initial neural network may include the M first blocks block and the second block. The second block is connected to each first block, and each first block corresponds to one target weight. The initial neural network is used to perform the product operation on the output of each first block and the corresponding target weight, to obtain the M first outputs. The second block is used to perform, based on the M first outputs, the operation corresponding to the second block. Specifically, the second block in the initial neural network may be used to perform, based on a summation result of the M first outputs, the operation corresponding to the second block.

Quantities of input channels and output channels of each of the M first blocks are the same as quantities of input channels and output channels of the second block, that is, the M first blocks and the second block are blocks in a same stage in the initial neural network.

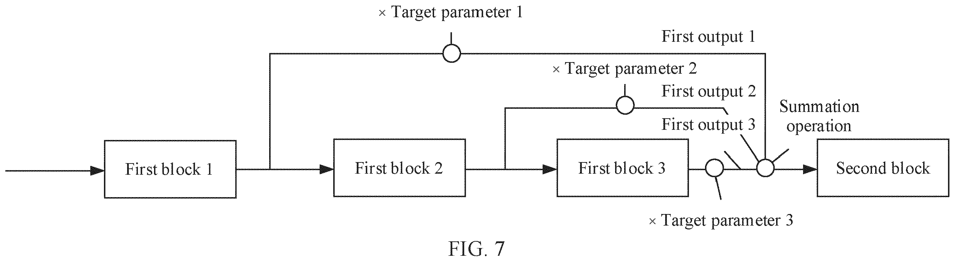

For example, M is 3. As shown in FIG. 7, the initial neural network may include three first blocks (including a first block 1, a first block 2, and a first block 3) and the second block. The second block is connected to the first block 1, the first block 2, and the first block 3, the first block 1 corresponds to a target weight 1, the first block 2 corresponds to a target weight 2, and the first block 3 corresponds to a target weight 3. The initial neural network is used to perform the product operation on an output of the first block 1 and the target weight 1, to obtain a first output 1, perform the product operation on an output of the first block 2 and the target weight 2, to obtain a first output 2, and perform the product operation on an output of the first block 3 and the target weight 3, to obtain a first output 3. The second block is used to perform, based on the first output 1, the first output 2, and the first output 3, the operation corresponding to the second block, and specifically, the second block is used to perform, based on a summation result of the first output 1, the first output 2, and the first output 3, the operation corresponding to the second block.

It should be understood that there may be another operation unit other than the target weight between blocks that have a connection relationship in the initial neural network, for example, an operation unit configured to adjust a size of a feature map. This is not limited in this application.

402: Perform model training on the initial neural network, to obtain M updated target weights.

In this embodiment of this application, after obtaining the to-be-trained initial neural network, the training device may perform model training on the initial neural network, to obtain the M updated target weights.

In this embodiment of this application, the training device may perform model training on the initial neural network on a target task, and update the M target weights, and the M updated target weights may be obtained when the M target weights are stable. That the target weights are stable may be understood as that a change of the target weight in an iterative training process is within a specific range. In some implementations, whether the M target weights are stable may be determined based on a quantity of times of iterative training. For example, the training device may perform model training on the initial neural network for a first preset quantity of iterations, to obtain the M updated target weights. The first preset quantity of iterations may be a preset value, and the preset value may be determined based on a total quantity of times of required iterative training. For example, when the quantity of times of iterative training reaches a specific percentage of the total quantity of times that training needs to be performed, it is considered that the M target weights are stable.

In this embodiment of this application, the M updated target weights are obtained at a fixed percentage location of a total quantity of training rounds. This ensures stability of the target weights, and ensures that a network obtained after topology optimization is fully trained. In addition, time of optimizing a single topology is kept basically the same as original training time, to ensure search efficiency.

It should be understood that, in a process of model training performed on the initial neural network, a normal weight of a network (that is, a to-be-trained weight in an atomic operation included in the block) and the M target weights may be simultaneously updated, or a normal weight of a network and the M target weights may be alternately updated. This is not limited in this application.

403: Update a connection relationship between the second block and the M first blocks in the initial neural network based on the M updated target weights, to obtain a first neural network, where the second block in the first neural network is used to perform, based on outputs of first blocks corresponding to N largest target weights in the M updated target weights, the operation corresponding to the second block, where N is less than M.

In this embodiment of this application, after model training is performed on the initial neural network, to obtain the M updated target weights, the connection relationship between the second block and the M first blocks in the initial neural network may be updated based on the M updated target weights, to obtain the first neural network, where the second block in the first neural network is used to perform, based on the outputs of the first blocks corresponding to N largest target weights in the M updated target weights, the operation corresponding to the second block. Specifically, the second block in the first neural network may be used to perform, based on a summation result of the outputs of the first blocks corresponding to the N largest target weights in the M updated target weights, the operation corresponding to the second block.

The M updated target weights may indicate whether a connection between blocks in which the M updated target weights each are located is important. An important determining basis is that a larger updated target weight indicates a more important connection between the blocks. Specifically, connections in which the N largest target weights in the M updated target weights are located may be reserved, and a connection in which a target weight other than the N largest target weights in the M updated target weights is located is removed.

In an implementation, the M first blocks and the second block in the initial neural network sequentially form a serial connection, the second block is an end point of the serial connection, the M first blocks in the initial neural network include a target block, the target block is connected to the second block on the serial connection, and when an updated target weight corresponding to the target block is not included in the N largest target weights in the M updated target weights, the second block in the first neural network is further used to perform, based on an output of the target block, the operation corresponding to the second block.

In other words, regardless of whether the updated target weight corresponding to the target block is one of the N largest target weights in the M updated target weights, a connection between the target block and the second block is always reserved, and the connection between the target block and the second block may be referred to as a backbone connection. The backbone connection is not removed, and this can ensure that a backbone architecture of the entire neural network is not damaged.

Specifically, in an implementation, if an updated target weight that belongs to the backbone connection is one of the N largest target weights in the M target weights, connections in which N updated target weights are located may be reserved; or if an updated target weight that belongs to the backbone connection is not one of the N largest target weights in the M target weights, connections in which N+1 updated target weights are located may be reserved.

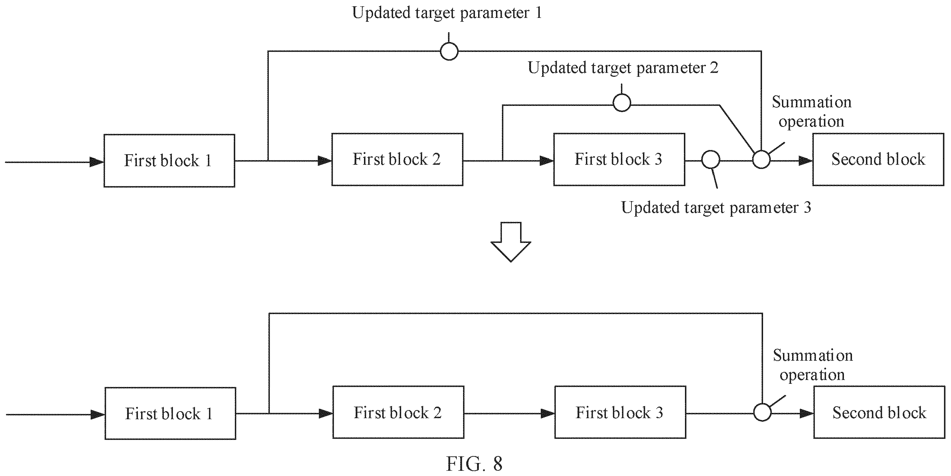

For example, as shown in FIG. 8, an example in which M is 3, and N is 1 is used, and an updated target weight 1 is greater than an updated target weight 2 and an updated target weight 3. In this case, a connection between the first block 1 and the second block and a connection (backbone connection) between the first block 3 and the second block may be reserved. As shown in FIG. 8, the second block in the first neural network is used to perform, based on the output of the first block 1 and the output of the first block 3, the operation corresponding to the second block. Specifically, the second block in the first neural network is used to perform, based on a summation result of the output of the first block 1 and the output of the first block 3, the operation corresponding to the second block.

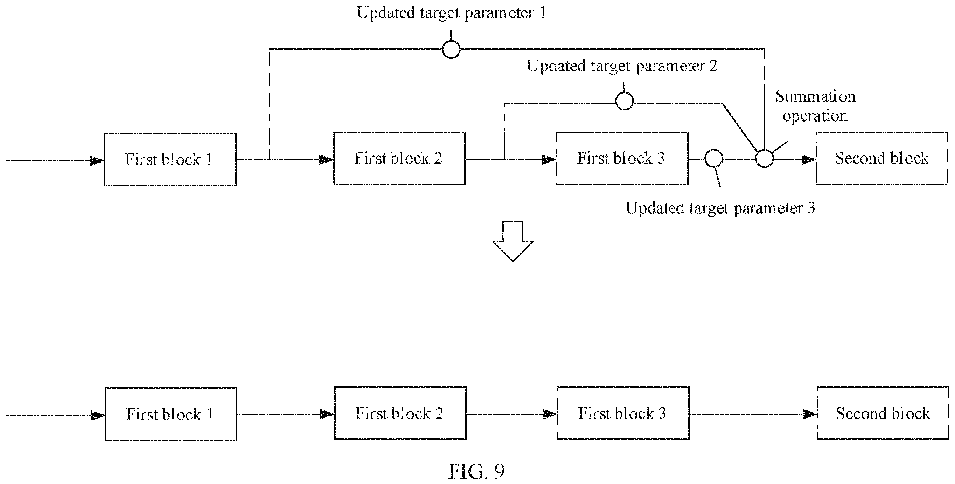

For example, as shown in FIG. 9, an example in which M is 3 and N is 1 is used, and an updated target weight 3 is greater than an updated target weight 1 and an updated target weight 2. In this case, only a connection between the first block 3 and the second block may be reserved. As shown in FIG. 8, the second block in the first neural network is used to perform, based on the output of the first block 3, the operation corresponding to the second block.

In this embodiment of this application, each block in the initial neural network may be used as the second block in the foregoing embodiment, a block whose output is used as the input of the second block is used as the first block, and the foregoing connections are removed and selected, to obtain the first neural network.

In this embodiment of this application, after the first neural network is obtained, model training may be performed on the first neural network until data processing precision of the first neural network meets a preset condition or a quantity of iterations of model training reaches a second preset quantity of iterations, to obtain a second neural network.

Specifically, the training device may obtain to-be-trained data, and the to-be-trained data includes at least one of the following: image data, text data, and voice data; and correspondingly, the training device may perform model training on the initial neural network based on the to-be-trained data.

An embodiment of this application provides a neural network structure determining method. The method includes: obtaining a to-be-trained initial neural network, where the initial neural network includes M first blocks block and a second block, the second block is connected to each first block, each first block corresponds to one target weight, the second block is used to perform, based on M first outputs, an operation corresponding to the second block, the M first outputs each are obtained by performing a product operation on an output of each first block and the corresponding target weight, and the target weight is a trainable weight, where M is an integer greater than 1; performing model training on the initial neural network, to obtain M updated target weights; and updating a connection relationship between the second block and the M first blocks in the initial neural network based on the M updated target weights, to obtain a first neural network, where the second block in the first neural network is used to perform, based on outputs of N first blocks corresponding to N largest target weights in the M updated target weights, the operation corresponding to the second block, where N is less than M. According to the foregoing method, in a process of searching for a connection relationship between blocks in the initial neural network, the trainable target weight is added to the connection between blocks, an updated target weight is used as a basis for determining importance of the connection relationship between the blocks, and the connection relationship between the blocks is selected and removed based on the updated target weight, to search for a topology structure of the neural network.

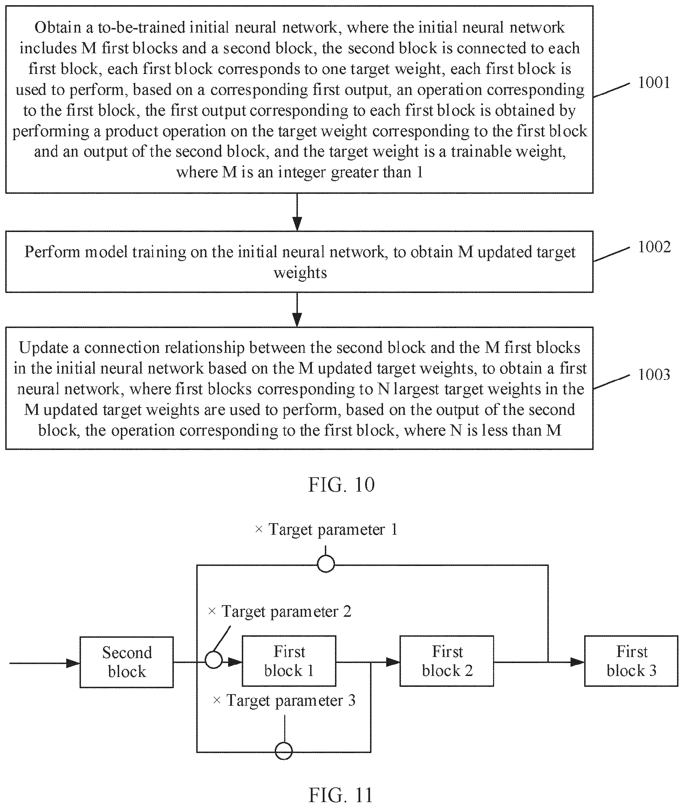

FIG. 10 is a schematic flowchart of a neural network structure determining method according to an embodiment of this application. As shown in FIG. 10, the neural network structure determining method provided in this embodiment of this application includes the following steps.

1001: Obtain a to-be-trained initial neural network, where the initial neural network includes M first blocks block and a second block, the second block is connected to each first block, each first block corresponds to one target weight, each first block is used to perform, based on a corresponding first output, an operation corresponding to the first block, the first output corresponding to each first block is obtained by performing a product operation on the target weight corresponding to the first block and an output of the second block, and the target weight is a trainable weight, where M is an integer greater than 1.

A difference from the embodiment corresponding to FIG. 4 is that: In FIG. 4, the outputs of the M first blocks are used as the input of the second block, and in a subsequent connection relationship selection process, a connection relationship is also selected based on the M updated target weights corresponding to the M first blocks. In this embodiment, the output of the second block is used as inputs of the M first blocks. For example, as shown in FIG. 11, an example in which M is 3 is used. The M first blocks include a first block 1, a first block 2, and a first block 3. The output of the second block may be used as an input of the first block 1, an input of the first block 2, and an input of the first block 3. Specifically, the output of the second block may be multiplied by a target weight 1, and a multiplication result is used as the input of the first block 1. The output of the second block may be multiplied by a target weight 2, and a multiplication result is used as the input of the first block 2. The output of the second block may be multiplied by a target weight 3, and a multiplication result is used as the input of the first block 3.

In a possible implementation, quantities of input channels and output channels of each of the M first blocks are the same as quantities of input channels and output channels of the second block.

It should be understood that for other specific descriptions of the step 1001, refer to similar descriptions in the embodiment corresponding to the step 401, and details are not described herein again.

1002: Perform model training on the initial neural network, to obtain the M updated target weights.

In a possible implementation, the training device may perform model training on the initial neural network for a first preset quantity of iterations, to obtain the M updated target weights.

For specific descriptions of the step 1002, refer to similar descriptions in the embodiment corresponding to the step 402, and details are not described herein again.

1003: Update a connection relationship between the second block and the M first blocks in the initial neural network based on the M updated target weights, to obtain a first neural network, where first blocks corresponding to N largest target weights in the M updated target weights are used to perform, based on the output of the second block, the operation corresponding to the first block, where N is less than M.

Similar to the embodiment corresponding to the step 403, in this embodiment, the first blocks corresponding to N largest target weights in the M updated target weights are used to perform, based on the output of the second block, the operation corresponding to the first block.

To reserve a backbone connection, in a possible implementation, the second block and the M first blocks in the initial neural network sequentially form a serial connection, the second block is a start point of the serial connection, the M first blocks in the initial neural network include a target block, the target block is connected to the second block on the serial path, and when an updated target weight corresponding to the target block is not included in the N largest target weights in the M updated target weights, the target block in the first neural network is further used to perform, based on the output of the second block, the operation corresponding to the target block.

In a possible implementation, N is 1.

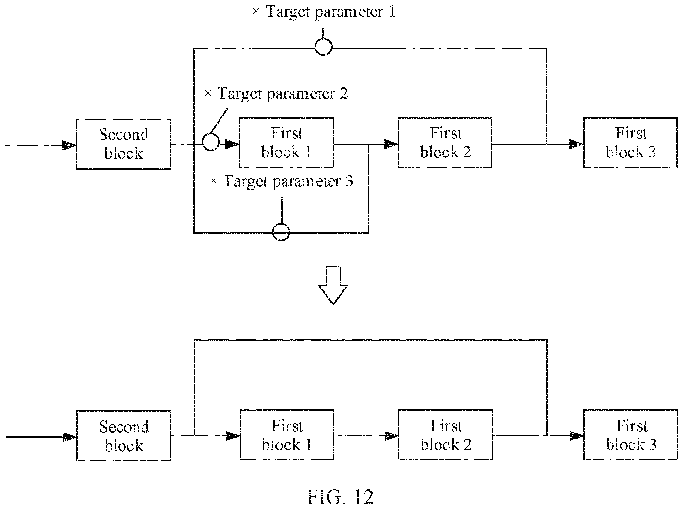

For example, as shown in FIG. 12, an example in which M is 3, and N is 1 is used, and an updated target weight 1 is greater than an updated target weight 2 and an updated target weight 3. In this case, a connection between the first block 1 and the second block and a connection (backbone connection) between the first block 3 and the second block may be reserved. As shown in FIG. 12, the output of the second block in the first neural network is separately used as the input of the first block 1 and the input of the first block 3. The first block 1 is used to perform, based on the output of the second block, the operation corresponding to the first block 1, and the first block 3 is used to perform, based on the output of the second block, the operation corresponding to the first block 3. Specifically, the first block 3 in the first neural network is used to perform, based on a summation result of the output of the second block and the output of the first block 2, the operation corresponding to the first block 3.

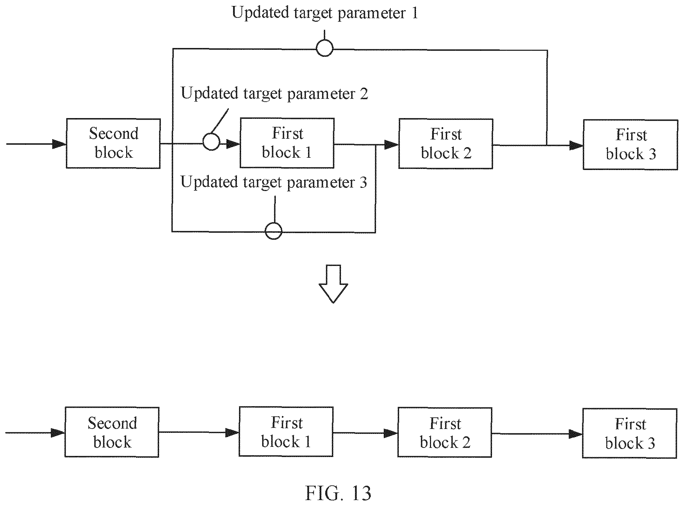

For example, as shown in FIG. 13, an example in which M is 3, and N is 1 is used, and an updated target weight 2 is greater than an updated target weight 1 and an updated target weight 3. In this case, only a connection between the first block 1 and the second block may be reserved. As shown in FIG. 13, the first block 1 in the first neural network is used to perform, based on the output of the second block, the operation corresponding to the first block 1.

In this embodiment of this application, each block in the initial neural network may be used as the second block in the foregoing embodiment, a block whose output is used as the input of the second block is used as the first block, and the foregoing connections are removed and selected, to obtain the first neural network.

In a possible implementation, the training device may perform model training on the first neural network until data processing precision of the first neural network meets a preset condition or a quantity of iterations of model training reaches a second preset quantity of iterations, to obtain a second neural network.

In a possible implementation, to-be-trained data is obtained, and the to-be-trained data includes at least one of the following: image data, text data, and voice data; and correspondingly, the training device may perform model training on the initial neural network based on the to-be-trained data.

This application provides a neural network structure determining method. The method includes: obtaining a to-be-trained initial neural network, where the initial neural network includes M first blocks block and a second block, the second block is connected to each first block, each first block corresponds to one target weight, each first block is used to perform, based on a corresponding first output, an operation corresponding to the first block, the first output corresponding to each first block is obtained by performing a product operation on the target weight corresponding to the first block and an output of the second block, and the target weight is a trainable weight, where M is an integer greater than 1, and the target weight is a trainable weight, where M is an integer greater than 1; performing model training on the initial neural network, to obtain M updated target weights; and updating a connection relationship between the second block and the M first blocks in the initial neural network based on the M updated target weights, to obtain a first neural network, where first blocks corresponding to N largest target weights in the M updated target weights are used to perform, based on the output of the second block, the operation corresponding to the first block, where N is less than M. According to the foregoing method, in a process of searching for a connection relationship between blocks in the initial neural network, the trainable target weight is added to the connection between blocks, an updated target weight is used as a basis for determining importance of the connection relationship between the blocks, and the connection relationship between the blocks is selected and removed based on the updated target weight, to search for a topology structure of the neural network.

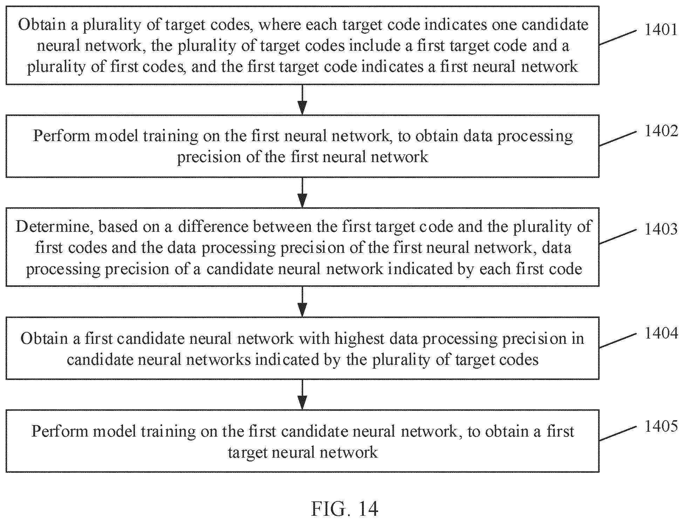

FIG. 14 is a schematic flowchart of a neural network structure determining method according to an embodiment of this application. As shown in FIG. 14, the neural network structure determining method provided in this embodiment of this application includes the following steps.

1401: Obtain a plurality of target codes, where each target code indicates one candidate neural network, the plurality of target codes include a first target code and a plurality of first codes, and the first target code indicates a first neural network.

In this embodiment of this application, when a structure of a neural network is searched for, a structure feature of the neural network may be written in a form of a code. Each code indicates at least one of the following structure features of a candidate neural network: a type of an operation unit included in the candidate neural network, a quantity of operation units included in the candidate neural network, and quantities of input feature channels and output feature channels of the operation unit included in the candidate neural network. The operation unit may be each atomic operation in a block. In other words, each code indicates a type of an atomic operation included in one candidate neural network, a quantity of atomic operations included in the candidate neural network, and quantities of input feature channels and output feature channels of the atomic operation included in the candidate neural network. In a same stage, quantities of input feature channels and output feature channels of an atomic operation in each block are the same. This means that each code indicates quantities of input feature channels and output feature channels of a block included in one candidate neural network.

In an implementation, the training device may generate a plurality of candidate codes, and screen the plurality of candidate codes based on a preset rule. The preset rule may be at least one of the following: selecting, from the plurality of candidate codes, a code indicating that a calculation amount required when the indicated candidate neural network runs is less than a first preset value, a code indicating that a quantity of weights included in the indicated candidate neural network is less than a second preset value, and a code indicating that a running speed at which the indicated candidate neural network runs is greater than a third preset value. The calculation amount may be a quantity of floating-point multiplications that need to be performed in the entire neural network, and a floating-point multiplication operation is most time-consuming. Therefore, the FLOPs may indicate the calculation amount of the neural network. The first preset value, the second preset value, and the third preset value may be preset.

In this embodiment of this application, a plurality of codes may be clustered, to obtain a plurality of code sets, each code set corresponds to one clustering category, the plurality of code sets include a target code set, and the target code set includes the plurality of target codes. The plurality of codes may be obtained after a plurality of candidate codes are screened. The first target code may be a code in the target code set. In an implementation, the first target code may be a clustering center of the target code set. The first target code indicates the first neural network.

It should be understood that the clustering may be a k-means algorithm, a DBSCAN algorithm, a BIRCH algorithm, a MeanShift algorithm, or the like.

1402: Perform model training on the first neural network, to obtain data processing precision of the first neural network.

In this embodiment of this application, the training device may select the first neural network indicated by one code (the first target code) in the plurality of target codes, to perform model training, so as to obtain the data processing precision of the first neural network.

It should be understood that, after the first neural network is obtained, a network topology in the first neural network may be optimized. For example, the first neural network may be optimized by using the neural network structure determining method described in embodiments corresponding to FIG. 4 to FIG. 13. In this case, model training may be performed on the optimized first neural network, to obtain the data processing precision of the first neural network.

In this embodiment of this application, data processing precision of the neural network may be a value of a loss function used to train the network, test precision of the neural network, or the like. This is not limited in this embodiment of this application.

In this embodiment of this application, model training is not performed on a plurality of candidate neural networks indicated by the plurality of target codes, and a candidate neural network with higher precision is selected from the plurality of candidate neural networks as a model search result based on data processing precision of the plurality of candidate neural networks. Instead, only a first neural network indicated by one target code (the first target code) in the plurality of target codes is selected, and model training is performed on the first neural network. Then data processing precision of candidate neural networks indicated by remaining target codes (a plurality of first codes) in the plurality of target codes are determined based on a difference between the target codes.

1403: Determine data processing precision of a candidate neural network indicated by each first code based on a difference between the first target code and the plurality of first codes and the data processing precision of the first neural network.

In this embodiment of this application, after model training is performed on the first neural network, to obtain the data processing precision of the first neural network, the data processing precision of the candidate neural network indicated by each first code may be determined based on the difference between the first target code and the plurality of first codes and the data processing precision of the first neural network.

In this embodiment of this application, the target code may include a plurality of bits, and each bit indicates a structure feature of the candidate neural network. To eliminate impact of a dimension difference between bits on a subsequent operation, each target code may be standardized. For example, an average value and a standard deviation of the plurality of target codes may be separately calculated for each bit of the target code, and then the average value is subtracted from each bit of the target code, and then divided by the standard deviation. Then a dimension of the target code does not affect a subsequent algorithm.

The following describes how to determine the data processing precision of the candidate neural network indicated by each first code based on the difference between the first target code and the plurality of first codes and the data processing precision of the first neural network.

For example, a Gaussian process may be used. The Gaussian process (Gaussian Process) is a very classic and mature machine learning algorithm. The Gaussian process can be used to estimate values of other sample points based on a distance between two sample points and values of some sample points. In this embodiment, a sample point is each target code, and a value of the sample point is the data processing precision of the candidate neural network indicated by the target code. A specific Gaussian process is uniquely determined by a mean function and a covariance function of the Gaussian process. Modeling using the Gaussian process is actually learning the mean function and the covariance function. In this embodiment, the Gaussian process may be learned in the following manner:

First, the covariance function may be learned, and the covariance function may be the following formula 1:

$$kernel(x_1, x_2) = \exp\left(-\frac{1}{2\sigma^2} \| x_1 - x_2 \|_{L2}^2\right) \quad \ldots\ldots(1)$$

In the formula, $x_1$ and $x_2$ are target codes, and $\sigma$ is a standard deviation that needs to be learned. The standard deviation is calculated as follows: All completed target codes are in pairs, and code distances {$Distance_1$, $Distance_2$, ..., $Distance_L$} between the target codes are calculated. These distances comply with a sequence of $Distance_1 < Distance_2$ $< ... < Distance_L$, and then $\dfrac{Distance_{\frac{L}{2}}}{2}$ is used as an estimated value of $\sigma$. In this way, learning of the covariance function is completed.

Then a performance average value and a standard deviation of all untrained codes may be calculated. It is assumed that a total of n target codes have been trained currently, and data processing precision of candidate neural networks indicated by the n target codes is denoted as $Acc_i$. The following variables may be defined:

$$Y = \begin{pmatrix} Acc_1 \\ Acc_2 \\ ... \\ Acc_n \end{pmatrix} \in R^n, \quad K = \begin{pmatrix} K_{1,1} & \cdots & K_{1,n} \\ \vdots & \ddots & \vdots \\ K_{n,1} & \cdots & K_{n,n} \end{pmatrix} \in R^{n \times n}, K_{i,j} = kernel(x^{(i)}, x^{(j)}) \quad ......(2)$$

In the formula, kernel is calculated according to the formula 1, and $x^{(i)}$ is an $i^{th}$ target code that has been trained.

After the foregoing two matrices are obtained, for any untrained target code x, a value of the covariance function of each of all codes that have been trained and the target code x is calculated according to formula 3:

$$\hat{k}(x) = \begin{pmatrix} kernel(x, x_1) \\ kernel(x, x_2) \\ ... \\ kernel(x, x_n) \end{pmatrix} \in R^n \quad ......(3)$$

According to formulas 1, 2, 3, and 4, a mean function of the target code x may be calculated as follows:

$$\hat{\mu}(x) = \hat{k}(x)^T (K + \eta^2 I)^{-1} Y \quad ......(4)$$

Herein, $\eta$ = 0.1, and I is a unit matrix.

According to formulas 1, 2, 3, and 5, the covariance function of each of all codes that have been trained and the target code x may be calculated:

$$\widetilde{kernel}(x_1, x_2) = kernel(x_1, x_2) - \hat{k}(x_1)^T (K + \eta^2 I)^{-1} \hat{k}(x_2) \quad ......(5)$$

Then data processing precision of candidate neural networks indicated by all target codes may be calculated. For an untrained target code, a mean function and a covariance function of the untrained target code are obtained. In this case, data processing precision of the candidate neural network indicated by the target code may be predicted according to formula 6:

$$\varphi_{EI}(x) = E(\max\{0, f(x) - \tau\}), \tau = \max_{i<n}(Acc_i) \quad ......(6)$$

Herein, a meaning of $\varphi_{EI}(x)$ is an expected data processing precision improvement of the target code x relative to currently highest data processing precision of a candidate neural network indicated by a target code, that is, Expected Improvement (EI). A larger value indicates that the target code should be preferentially trained in a next round. In this formula, $f(x)$ is a Gaussian process function:

$$f \sim GaussianProcess(\mu, kernel), \quad \mu = \hat{\mu}(x), kernel = \widetilde{kernel}(x_1, x_2)$$

In the formula, $\hat{\mu}(x)$ is obtained according to the formula 4, and $\widetilde{kernel}(x_1, x_2)$ is obtained according to the formula 5.

In the foregoing manner, each target code may predict, through the foregoing process, that a data processing precision improvement of the candidate neural network indicated by each target code, to obtain the data processing precision of the candidate neural network indicated by each first code.

1404: Obtain a first candidate neural network with highest data processing precision in candidate neural networks indicated by the plurality of target codes.

In this embodiment of this application, after data processing precision of each of the candidate neural networks indicated by the plurality of target code is obtained, the first candidate neural network with the highest data processing precision in the candidate neural networks indicated by the plurality of target code may be selected.

1405: Perform model training on the first candidate neural network, to obtain a first target neural network.

In this case, data processing precision of candidate neural networks other than the first target neural network is determined based on a difference between target codes, and is not very precise. Therefore, model training may be performed on the first candidate neural network with the highest data processing precision in the candidate neural networks, to obtain the first target neural network.

It should be understood that, after the first candidate neural network is obtained, a network topology in the first candidate neural network may be optimized. For example, the first candidate neural network may be optimized by using the neural network structure determining method described in embodiments corresponding to FIG. 4 to FIG. 13. In this case, the training device may perform model training on the optimized first candidate neural network, to obtain the first target neural network.

Specifically, in an implementation, the first candidate neural network includes M first blocks block and a second block. The second block is connected to each first block, and each first block corresponds to one target weight. The first candidate neural network is used to perform a product operation on an output of each first block and the corresponding target weight, to obtain M first outputs, the second block is used to perform, based on the M first outputs, an operation corresponding to the second block, and the target weight is a trainable weight, where M is an integer greater than 1.

The training device may perform model training on the first candidate neural network, to obtain M updated target weights; update a connection relationship between the second block and the M first blocks in the first candidate neural network based on the M updated target weights, to obtain a second neural network, where the second block in the second neural network is used to perform, based on outputs of first blocks corresponding to N largest target weights in the M updated target weights, the operation corresponding to the second block, where N is less than M; and perform model training on the second neural network, to obtain the first target neural network.

Specifically, in an implementation, the first candidate neural network includes M first blocks block and a second block. The second block is connected to each first block, and each first block corresponds to one target weight. The first candidate neural network is used to perform a product operation on an output of the second block and each target weight, to obtain M first outputs, each first block is used to perform, based on a corresponding first output, an operation corresponding to the first block, and the target weight is a trainable weight, where M is an integer greater than 1.

The training device may perform model training on the first candidate neural network, to obtain M updated target weights; update a connection relationship between the second block and the M first blocks in the first candidate neural network based on the M updated target weights, to obtain a second neural network, where first blocks corresponding to N largest target weights in the M updated target weights each are used to perform, based on an output of the second block, the operation corresponding to the first block, where N is less than M; and perform model training on the second neural network, to obtain the first target neural network.

In this embodiment of this application, the training device may further obtain data processing precision of the first target neural network, where the plurality of target codes include a second target code, and the second target code indicates the first target neural network; and determine, based on a difference between the second target code and a code other than the second target code in the plurality of target codes and the data processing precision of the first target neural network, data processing precision of a candidate neural network indicated by each target code other than the second target code in the plurality of target codes. Then the training device may determine, based on data processing precision of the candidate neural networks indicated by the plurality of target codes, a second candidate neural network with highest data processing precision, and perform model training on the second candidate neural network, to obtain a second target neural network.

Then the training device may repeat the foregoing process, and may obtain an ideal model as a neural model structure search result through a preset quantity of iterations (for example, four rounds).

For example, if 10 clustering categories are obtained in a clustering result, a candidate neural network model with highest data processing precision in code sets corresponding to the 10 clustering categories is obtained each time, to determine data processing precision of candidate neural networks indicated by remaining target codes in the code set. After four rounds of iterative processing, model training may be performed on 40 candidate neural networks, and then one candidate neural network with highest data processing precision in the 40 candidate neural networks may be selected as the neural model structure search result.

In this embodiment of this application, model training is not performed on the plurality of candidate neural networks indicated by the plurality of target codes, and the candidate neural network with higher precision is selected from the plurality of candidate neural networks as a model search result based on the data processing precision of the plurality of candidate neural networks. Instead, only the first neural network indicated by one target code (the first target code) in the plurality of target codes is selected, and model training is performed on the first neural network. Then the data processing precision of candidate neural networks indicated by remaining target codes (the plurality of first codes) in the plurality of target codes are determined based on the difference between the target codes. Compared with existing topology search algorithms, this algorithm greatly reduces a quantity of times of model training and greatly improves search efficiency.

In the following, an example in which the candidate neural network is a MobileNetV2 network, and a topology structure of the neural network is optimized in an ImageNet image classification task is used for description.

First, a code candidate set may be generated. The MobileNetV2 network may be divided into seven stages in series, and structure features such as a depth of a neural network in each stage (a quantity of operation units included in the candidate neural network) and a quantity of output feature channels of an operation unit included in the candidate neural network may be coded. For example, [1, 2, 3, 4, 3, 3, 1, 16, 24, 32, 48, 64, 192, 376] indicates that in the seven stages, a basic network structure (that is, the foregoing operation unit) needs to be separately repeated for 1 time, 2 times, 3 times, 4 times, 3 times, 3 times, and 1 time. Quantities of output channels are 16, 24, 32, 48, 64, 192, and 376. Each code length is 14 bits. A code may uniquely determine a candidate neural network. After a code scheme is determined, an upper search limit and a lower search lower limit may be set for each bit of the code. For example, upper search limit and lower search limit of the 14 bits are respectively limited as follows: 3 and 1, 4 and 1, 5 and 2, 6 and 2, 5 and 1, 5 and 1, 3 and 1, 48 and 16, 48 and 16, 64 and 24, 96 and 32, 96 and 32, 256 and 112, and 512 and 256.

Then the training device may evenly generate a large quantity of codes based on a quantity of bits of the code and the upper search limit and the lower search limit of each bit. Each time a code is generated, a calculation amount of a neural network indicated by the code is calculated. A code that meets a requirement is reserved based on a specified limitation, to form a code candidate set. For example, under a limitation of 300 M, about 20,000 candidate codes may be obtained.

Then the training device may perform modeling on the code candidate set. Specifically, each code may be standardized. Specifically, for each bit of the code, an average value and a standard deviation are separately calculated on the entire candidate set, and then the average value is subtracted from each bit of the code, and then divided by the standard deviation. Then a dimension of the code does not affect a subsequent algorithm. The training device may perform K-Means clustering on a plurality of codes obtained after standardization. Obtained clustering centers (the first target codes) may be considered as most representative structures in the existing code space, and data processing precision of the clustering centers may represent performance of an entire class. Performance evaluation is performed on the clustering centers, to model the performance of all network structures in the entire search space more efficiently. In this manner, 10 network codes are totally generated in a first round, and training is separately started, topology optimization is performed, and data processing precision is obtained. Then the training device may train a fully connected network. Specifically, each code that needs to be trained by the training device needs to be converted into a specific neural network by using a network parser D. Before topology optimization, the fully connected network is generated. A specific full connection rule is to connect all network blocks in each stage, to form a very dense network structure. A normal weight of a network and a target weight (for details, refer to the descriptions in embodiments corresponding to FIG. 4 to FIG. 13) are simultaneously optimized. When a quantity of training rounds reaches 40% of a total quantity of rounds, it is considered that an updated target weight is stable, a topology structure of the neural network is optimized based on the updated target weight, the optimized neural network is trained until convergence, and a code candidate set model is updated. Specifically, after model training is performed on the 10 network codes, and data processing performance is obtained, modeling for all codes in the candidate set may be updated, 10 new codes are generated based on the updated clustering center, and the foregoing process is repeated. (For example, if four rounds of repetition are performed), 40 models are totally trained. As searching is performed, it may be found that performance of the network trained later is better than performance of the network trained earlier. Among the 40 models, the best one is selected and output as the neural model structure search result.

In a specific product form, this embodiment of this application may be provided for a user as a part of the AutoML system. The user provides a data set and a network size requirement (a weight requirement/a speed requirement, or the like) for a platform, and provides a to-be-adjusted basic network structure. An optimized network structure may be obtained by using the neural network structure determining method described in embodiments corresponding to FIG. 4 to FIG. 14. This embodiment may be provided as a part of the AutoML system for the user through a cloud service.

In addition, this embodiment may also be provided as an independent algorithm package for the user. The user may obtain an optimized network structure by using the neural network structure determining method described in embodiments corresponding to FIG. 4 to FIG. 14.

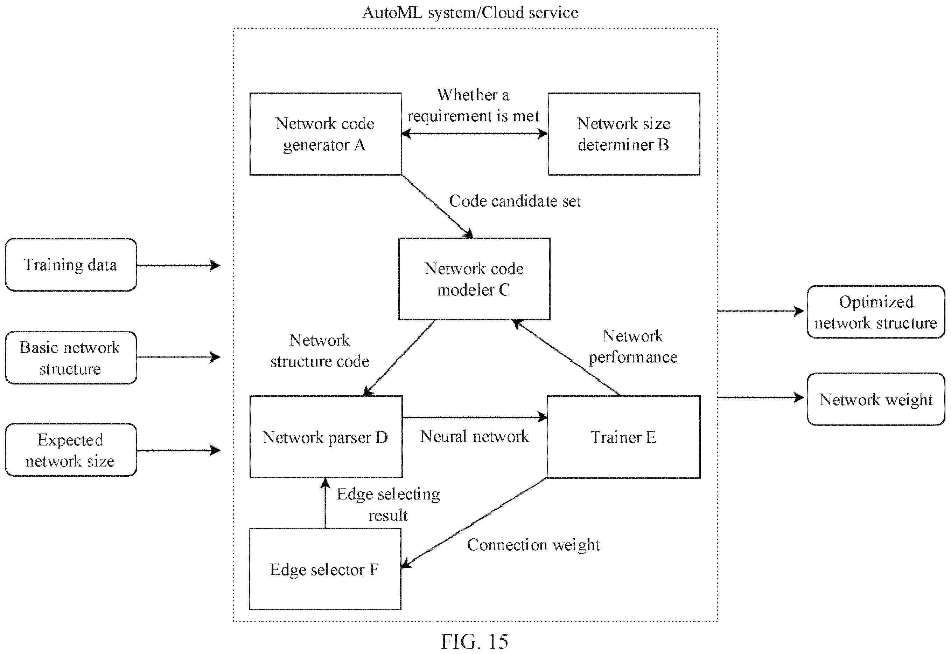

As shown in FIG. 15, a neural network structure determining apparatus provided in this embodiment of this application may include a network code generator A, a network size determiner B, a network code modeler C, a network parser D, a trainer E, and an edge selector F. For a relationship among the network code generator A, the network size determiner B, the network code modeler C, the network parser D, the trainer E, and the edge selector F, refer to FIG. 15.

Specifically, the network code generator A may generate a plurality of codes as evenly as possible based on possible code space. These codes define a structure feature of a neural network. In a generation process, whether to add a code to a code candidate set is continuously determined based on a result of the network size determiner B.

The network size determiner B may evaluate a calculation amount, a weight, a running speed, and the like of a candidate neural network indicated by each code, to determine whether a user limitation is met.

The network code modeler C may perform modeling on a code, evaluate possible data processing precision of the candidate neural network indicated by each code, send a to-be-trained code to the network parser D, and receive data processing precision of the indicated candidate neural network returned by the trainer E. In a searching process, a modeling result is updated based on the received data processing precision, to make an evaluation more accurate. A target code with best performance is obtained at the end of searching.

The network parser D may convert the code into a specific neural network.

The trainer E may train a specific neural network based on training data provided by a user, and output data processing precision (for example, test precision and a training loss function value) and a trained neural network.

The edge selector F may optimize a topology structure of the neural network obtained through conversion.

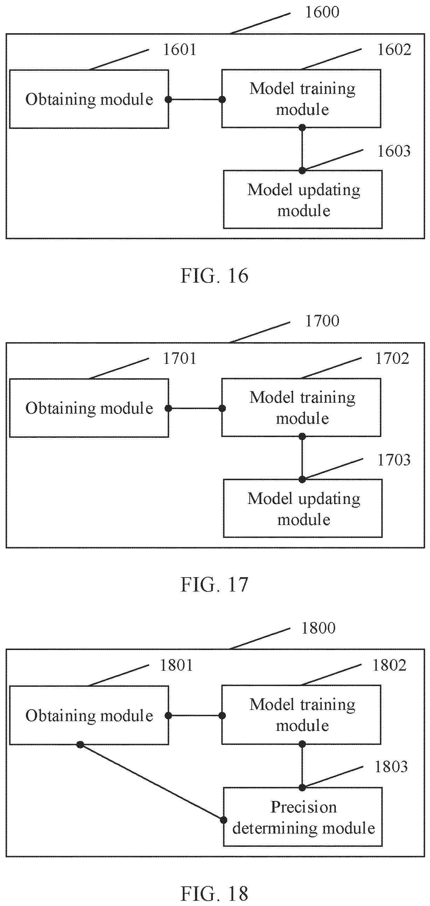

FIG. 16 is a schematic diagram of a structure of a neural network structure determining apparatus 1600 according to an embodiment of this application. As shown in FIG. 16, the neural network structure determining apparatus 1600 according to this embodiment of this application may include an obtaining module 1601, a model training module 1602, and a model updating module 1603.

The obtaining module 1601 is configured to obtain a to-be-trained initial neural network, the initial neural network includes M first blocks block and a second block, the second block is connected to each first block, each first block corresponds to one target weight, the second block is used to perform, based on M first outputs, an operation corresponding to the second block, the M first outputs each are obtained by performing a product operation on an output of each first block and the corresponding target weight, and the target weight is a trainable weight, where M is an integer greater than 1.

For specific descriptions of the obtaining module 1601, refer to the descriptions in the step 401 and the corresponding embodiment, and details are not described herein again.

The model training module 1602 is configured to perform model training on the initial neural network, to obtain M updated target weights.

For specific descriptions of the model training module 1602, refer to the descriptions in the step 402 and the corresponding embodiment, and details are not described herein again.

The model updating module 1603 is configured to update a connection relationship between the second block and the M first blocks in the initial neural network based on the M updated target weights, to obtain a first neural network, where the second block in the first neural network is used to perform, based on outputs of first blocks corresponding to N largest target weights in the M updated target weights, the operation corresponding to the second block, where N is less than M.

For specific descriptions of the model updating module 1603, refer to the descriptions in the step 403 and the corresponding embodiment, and details are not described herein again.

In a possible implementation, the M first blocks and the second block in the initial neural network sequentially form a serial connection, the second block is an end point of the serial connection, the M first blocks in the initial neural network include a target block, the target block is connected to the second block on the serial connection, and when an updated target weight corresponding to the target block is not included in the N largest target weights in the M updated target weights, the second block in the first neural network is further used to perform, based on an output of the target block, the operation corresponding to the second block.

In a possible implementation, N is 1.

In a possible implementation, the model training module is configured to perform model training on the initial neural network for a first preset quantity of iterations, to obtain the M updated target weights.

In a possible implementation, the model training module is configured to perform model training on the first neural network until data processing precision of the first neural network meets a preset condition or a quantity of iterations of model training reaches a second preset quantity of iterations, to obtain a second neural network.

In a possible implementation, quantities of input channels and output channels of each of the M first blocks are the same as quantities of input channels and output channels of the second block.

In a possible implementation, the second block in the initial neural network is used to perform, based on a summation result of the M first outputs, the operation corresponding to the second block.

The second block in the first neural network is used to perform, based on a summation result of the outputs of the first blocks corresponding to the N largest target weights in the M updated target weights, the operation corresponding to the second block.

In a possible implementation, the obtaining module is configured to obtain to-be-trained data, and the to-be-trained data includes at least one of the following: image data, text data, and voice data. Correspondingly, performing model training on the initial neural network includes:

The model training module is configured to perform model training on the initial neural network based on the to-be-trained data.

FIG. 17 is a schematic diagram of a structure of a neural network structure determining apparatus 1700 according to an embodiment of this application. As shown in FIG. 17, the neural network structure determining apparatus 1700 according to this embodiment of this application may include an obtaining module 1701, a model training module 1702, and a model updating module 1703.

The obtaining module 1701 is configured to obtain a to-be-trained initial neural network, the initial neural network includes M first blocks block and a second block, the second block is connected to each first block, each first block corresponds to one target weight, each first block is used to perform, based on a corresponding first output, an operation corresponding to the first block, the first output corresponding to each first block is obtained by performing a product operation on the target weight corresponding to the first block and an output of the second block, and the target weight is a trainable weight, where M is an integer greater than 1.

For specific descriptions of the obtaining module 1701, refer to the descriptions in the step 1001 and the corresponding embodiment, and details are not described herein again.

The model training module 1702 is configured to perform model training on the initial neural network, to obtain M updated target weights.

For specific descriptions of the model training module 1702, refer to the descriptions in the step 1002 and the corresponding embodiment, and details are not described herein again.

The model updating module 1703 is configured to update a connection relationship between the second block and the M first blocks in the initial neural network based on the M updated target weights, to obtain a first neural network, where first blocks corresponding to N largest target weights in the M updated target weights are used to perform, based on the output of the second block, the operation corresponding to the first block, where N is less than M.

For specific descriptions of the model updating module 1703, refer to the descriptions in the step 1003 and the corresponding embodiment, and details are not described herein again.

In a possible implementation, the second block and the M first blocks in the initial neural network sequentially form a serial connection, the second block is a start point of the serial connection, the M first blocks in the initial neural network include a target block, the target block is connected to the second block on the serial path, and when an updated target weight corresponding to the target block is not included in the N largest target weights in the M updated target weights, the target block in the first neural network is further used to perform, based on the output of the second block, the operation corresponding to the target block.

In a possible implementation, N is 1.

In a possible implementation, the model training module is configured to perform model training on the initial neural network for a first preset quantity of iterations, to obtain the M updated target weights.

In a possible implementation, the model training module is configured to perform model training on the first neural network until data processing precision of the first neural network meets a preset condition or a quantity of iterations of model training reaches a second preset quantity of iterations, to obtain a second neural network.

In a possible implementation, quantities of input channels and output channels of each of the M first blocks are the same as quantities of input channels and output channels of the second block.

In a possible implementation, the obtaining module is configured to obtain to-be-trained data, and the to-be-trained data includes at least one of the following: image data, text data, and voice data. Correspondingly, performing model training on the initial neural network includes:

The model training module is configured to perform model training on the initial neural network based on the to-be-trained data.

FIG. 18 is a schematic diagram of a structure of a neural network structure determining apparatus 1800 according to an embodiment of this application. As shown in FIG. 18, the neural network structure determining apparatus 1800 according to this embodiment of this application may include an obtaining module 1801, a model training module 1802, and a precision determining module 1803.

The obtaining module 1801 is configured to obtain a plurality of target codes, each target code indicates one candidate neural network, the plurality of target codes include a first target code and a plurality of first codes, and the first target code indicates a first neural network.

For specific descriptions of the obtaining module 1801, refer to the descriptions in the step 1401 and the corresponding embodiment, and details are not described herein again.

The model training module 1802 is configured to perform model training on the first neural network, to obtain data processing precision of the first neural network.

For specific descriptions of the model training module 1802, refer to the descriptions in the step 1402 and the corresponding embodiment, and details are not described herein again.

The precision determining module 1803 is configured to determine, based on a difference between the first target code and the plurality of first codes and the data processing precision of the first neural network, data processing precision of a candidate neural network indicated by each first code.

For specific descriptions of the precision determining module 1803, refer to the descriptions in the step 1403 and the corresponding embodiment, and details are not described herein again.

The obtaining module 1801 is configured to obtain a first candidate neural network with highest data processing precision in candidate neural networks indicated by the plurality of target codes.

For specific descriptions of the obtaining module 1801, refer to the descriptions in the step 1401 and the corresponding embodiment, and details are not described herein again.

The model training module 1802 is configured to perform model training on the first candidate neural network, to obtain a first target neural network.

For specific descriptions of the model training module 1802, refer to the descriptions in the step 1405 and the corresponding embodiment, and details are not described herein again.

In a possible implementation, the obtaining module is configured to: obtain data processing precision of the first target neural network, where the plurality of target codes include a second target code, and the second target code indicates the first target neural network;

determine, based on a difference between the second target code and a code other than the second target code in the plurality of target codes and the data processing precision of the first target neural network, data processing precision of a candidate neural network indicated by each target code other than the second target code in the plurality of target codes; and

determine, based on data processing precision of the candidate neural networks indicated by the plurality of target codes, a second candidate neural network with highest data processing precision, and perform model training on the second candidate neural network, to obtain a second target neural network.

In a possible implementation, each target code indicates at least one of the following structure features of a candidate neural network:

a type of an operation unit included in the candidate neural network, a quantity of operation units included in the candidate neural network, and quantities of input feature channels and output feature channels of the operation unit included in the candidate neural network.

In a possible implementation, the apparatus further includes:

a clustering module, configured to cluster a plurality of codes, to obtain a plurality of code sets, where each code set corresponds to one clustering category, the plurality of code sets include a target code set, and the target code set includes the plurality of target codes.

In a possible implementation, the first target code is a clustering center of the target code set.

In a possible implementation, the candidate neural network indicated by each target code meets at least one of the following conditions:

A calculation amount required when the candidate neural network indicated by each target code runs is less than a first preset value.

A quantity of weights included in the candidate neural network indicated by each target code is less than a second preset value.

A running speed at which the candidate neural network indicated by each target code runs is greater than a third preset value.

In a possible implementation, the first candidate neural network includes M first blocks block and a second block, the second block is connected to each first block, each first block corresponds to one target weight, the second block is used to perform, based on M first outputs, an operation corresponding to the second block, the M first outputs each are obtained by performing a product operation on an output of each first block and the corresponding target weight, and the target weight is a trainable weight, where M is an integer greater than 1.

The model training module is configured to: perform model training on the first candidate neural network, to obtain M updated target weights;

update a connection relationship between the second block and the M first blocks in the first candidate neural network based on the M updated target weights, to obtain a second neural network, where the second block in the second neural network is used to perform, based on outputs of first blocks corresponding to N largest target weights in the M updated target weights, the operation corresponding to the second block, where N is less than M; and

perform model training on the second neural network, to obtain the first target neural network.

In a possible implementation, the first candidate neural network includes M first blocks block and a second block, the second block is connected to each first block, each first block corresponds to one target weight, each first block is used to perform, based on a corresponding first output, an operation corresponding to the first block, the first output corresponding to each first block is obtained by performing a product operation on the target weight corresponding to the first block and an output of the second block, and the target weight is a trainable weight, where M is an integer greater than 1.

The model training module is configured to: perform model training on the first candidate neural network, to obtain M updated target weights;

update a connection relationship between the second block and the M first blocks in the first candidate neural network based on the M updated target weights, to obtain a second neural network, where first blocks corresponding to N largest target weights in the M updated target weights are used to perform, based on the output of the second block, the operation corresponding to the first block, where N is less than M; and

perform model training on the second neural network, to obtain the first target neural network.

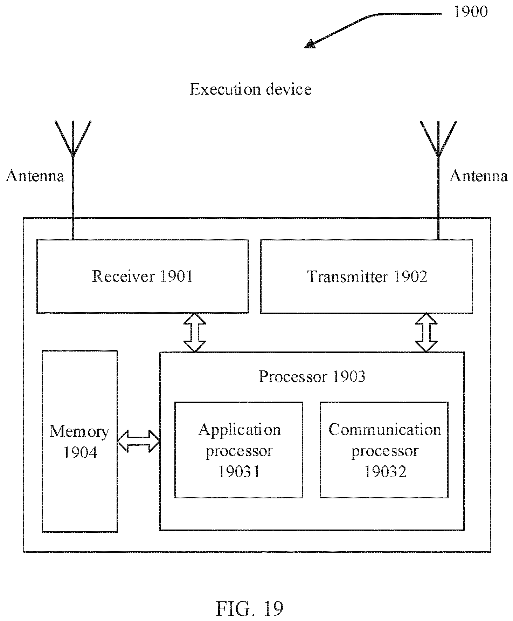

The following describes an execution device according to an embodiment of this application. FIG. 19 is a schematic diagram of a structure of an execution device according to an embodiment of this application. An execution device 1900 may be specifically represented as a virtual reality VR device, a mobile phone, a tablet computer, a notebook computer, an intelligent wearable device, a monitoring data processing device, or the like. This is not limited herein. The execution device 1900 may be configured to implement the neural network structure determining method in embodiments corresponding to FIG. 4 to FIG. 14. Specifically, the execution device 1900 includes a receiver 1901, a transmitter 1902, a processor 1903, and a memory 1904 (the execution device 1900 may include one or more processors 1903, and one processor is used as an example in FIG. 19). The processor 1903 may include an application processor 19031 and a communication processor 19032. In some embodiments of this application, the receiver 1901, the transmitter 1902, the processor 1903, and the memory 1904 may be connected through a bus or in another manner.

The memory 1904 may include a read-only memory and a random access memory, and provides instructions and data for the processor 1903. Apart of the memory 1904 may further include a non-volatile random access memory (non-volatile random access memory, NVRAM). The memory 1904 stores a processor and operation instructions, an executable module or a data structure, or a subset thereof, or an extended set thereof. The operation instructions may include various operation instructions for implementing various operations.

The processor 1903 controls an operation of the execution device. During specific application, components of the execution device are coupled together by using a bus system. In addition to a data bus, the bus system may further include a power bus, a control bus, a status signal bus, and the like. However, for clear description, various types of buses in the figure are marked as the bus system.

The methods disclosed in the foregoing embodiments of this application may be applied to the processor 1903, or may be implemented by the processor 1903. The processor 1903 may be an integrated circuit chip, and has a signal processing capability. In an implementation process, the steps in the foregoing methods may be implemented by using a hardware integrated logical circuit in the processor 1903, or by using instructions in a form of software. The processor 1903 may be a general-purpose processor, a digital signal processor (digital signal processing, DSP), a microprocessor or a microcontroller, and may further include an application-specific integrated circuit (application-specific integrated circuit, ASIC), a field-programmable gate array (field-programmable gate array, FPGA) or another programmable logic device, a discrete gate or transistor logic device, or a discrete hardware component. The processor 1903 may implement or perform the methods, steps, and logical block diagrams that are disclosed in embodiments of this application. The general-purpose processor may be a microprocessor, or the processor may be any conventional processor or the like. Steps of the methods disclosed with reference to embodiments of this application may be directly performed and completed by a hardware decoding processor, or may be performed and completed by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory 1904, and the processor 1903 reads information in the memory 1904 and completes the steps in the foregoing methods in combination with hardware in the processor 1903.

The receiver 1901 may be configured to receive input digit or character information, and generate a signal input related to a related setting and function control of the execution device. The transmitter 1902 may be configured to output digit or character information through a first interface. The transmitter 1902 may be further configured to send an instruction to a disk group through the first interface, to modify data in the disk group. The transmitter 1902 may further include a display device such as a display.

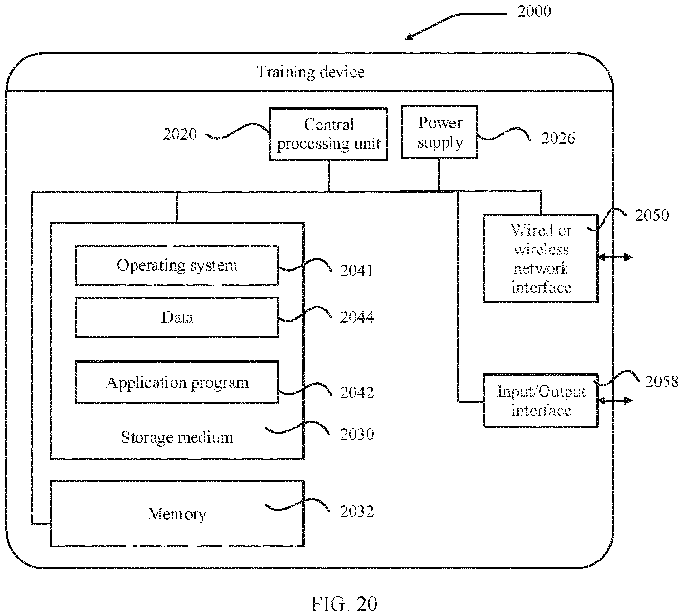

An embodiment of this application further provides a training device. FIG. 20 is a schematic diagram of a structure of a training device according to an embodiment of this application. The neural network structure determining apparatus described in embodiments corresponding to FIG. 15 to FIG. 17 may be deployed on a training device 2000, and is configured to implement functions of the neural network structure determining apparatus described in embodiments corresponding to FIG. 15 to FIG. 17. Specifically, the training device 2000 is implemented by one or more servers, the training device 2000 may vary greatly with different configurations or performance, and may include one or more central processing units (central processing units, CPU) 2020 (for example, one or more processors), a memory 2032, and one or more storage media 2030 (for example, one or more mass storage devices) that stores an application program 2042 or data 2044. The memory 2032 and the storage medium 2030 may be used for temporary storage or permanent storage. A program stored in the storage medium 2030 may include one or more modules (not shown in the figure), and each module may include a series of instruction operations for the training device. Further, the central processing unit 2020 may be configured to communicate with the storage medium 2030, and perform, on the training device 2000, the series of instruction operations in the storage medium 2030.

The training device 2000 may further include one or more power supplies 2026, one or more wired or wireless network interfaces 2050, one or more input/output interfaces 2058, or one or more operating systems 2041, such as Windows ServerTM, Mac OS XTM, UnixTM, LinuxTM and FreeBSDTM.

In this embodiment of this application, the central processing unit 2020 is configured to perform the steps related to the neural network structure determining method described in the foregoing embodiments.

An embodiment of this application further provides a computer program product, including a code. When the code is run on a computer, the computer is enabled to perform the steps performed by the execution device, or the computer is enabled to perform the steps performed by the training device.

An embodiment of this application further provides a computer-readable storage medium. The computer-readable storage medium stores a program used for signal processing. When the program runs on a computer, the computer is enabled to perform the steps performed by the execution device or the steps performed by the training device.

The execution device, the training device, or the terminal device provided in embodiments of this application may be specifically a chip. The chip includes a processing unit and a communication unit. The processing unit may be, for example, a processor, and the communication unit may be, for example, an input/output interface, a pin, or a circuit. The processing unit may execute computer-executable instructions stored in a storage unit, so that a chip in the execution device performs the data processing method described in the foregoing embodiments, or a chip in the training device performs the data processing method described in the foregoing embodiments. Optionally, the storage unit is a storage unit in the chip, for example, a register or a buffer. Alternatively, the storage unit may be a storage unit in a wireless access device but outside the chip, for example, a read-only memory (read-only memory, ROM), another type of static storage device that can store static information and instructions, or a random access memory (random access memory, RAM).

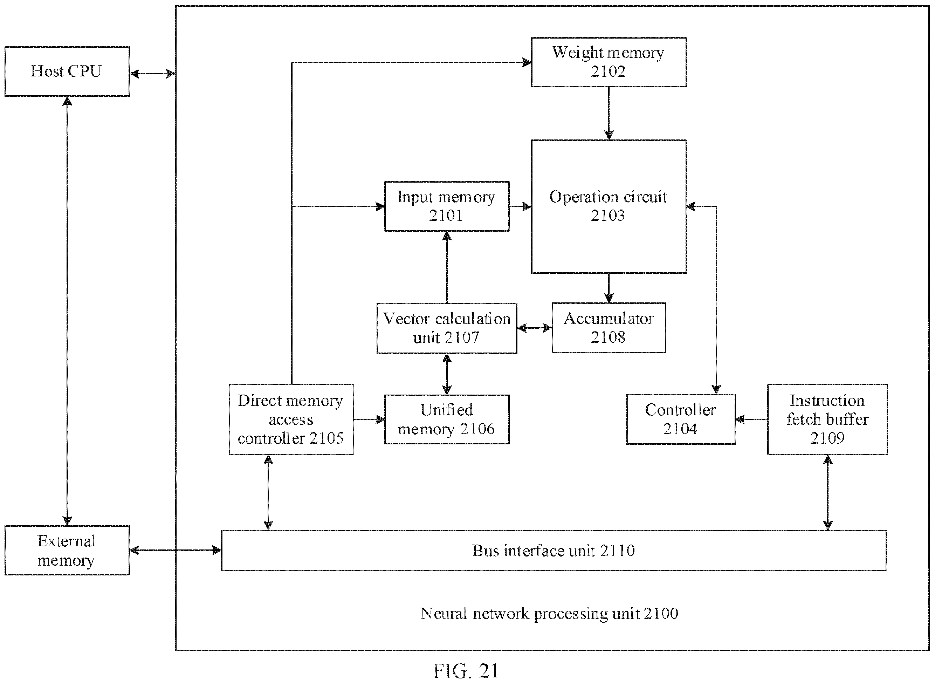

Specifically, refer to FIG. 21. FIG. 21 is a schematic diagram of a structure of a chip according to an embodiment of this application. The chip may be represented as a neural network processing unit NPU 2100. The NPU 2100 is mounted to a host CPU (Host CPU) as a coprocessor, and the Host CPU allocates a task. A core part of the NPU is an operation circuit 2103, and a controller 2104 controls the operation circuit 2103 to extract matrix data in a memory and perform a multiplication operation.

In some implementations, the operation circuit 2103 internally includes a plurality of processing units (Process Engine, PE). In some implementations, the operation circuit 2103 is a two-dimensional systolic array. Alternatively, the operation circuit 2103 may be a one-dimensional systolic array or another electronic circuit that can perform mathematical operations such as multiplication and addition. In some implementations, the operation circuit 2103 is a general-purpose matrix processor.

For example, it is assumed that there is an input matrix A, a weight matrix B, and an output matrix C. The operation circuit fetches data corresponding to the matrix B from a weight memory 2102, and buffers the data on each PE in the operation circuit. The operation circuit fetches data of the matrix A from an input memory 2101 to perform a matrix operation on the matrix B, to obtain a partial result or a final result of the matrix, which is stored in an accumulator (accumulator) 2108.

A unified memory 2106 is configured to store input data and output data. Weight data is directly transferred to the weight memory 2102 by using a direct memory access controller (Direct Memory Access Controller, DMAC) 2105. The input data is also transferred to the unified memory 2106 by using the DMAC.

A BIU, bus interface unit, that is, a bus interface unit 2110, is configured to perform interaction between an AXI bus and the DMAC and interaction between the AXI bus and an instruction fetch buffer (Instruction Fetch Buffer, IFB) 2109.

The bus interface unit 2110 (Bus Interface Unit, BIU for short) is configured to obtain instructions from an external memory by the instruction fetch buffer 2109, and is further configured to obtain original data of the input matrix A or the weight matrix B from the external memory by the direct memory access controller 2105.

The DMAC is mainly configured to transfer input data in the external memory DDR to the unified memory 2106, transfer weight data to the weight memory 2102, or transfer input data to the input memory 2101.

A vector calculation unit 2107 includes a plurality of operation processing units. If necessary, further processing, for example, vector multiplication, vector addition, an exponential operation, a logarithmic operation, and size comparison is performed on an output of the operation circuit 2103. The vector calculation unit 1207 is mainly configured to perform network calculation at a non-convolutional/fully connected layer in a neural network, for example, batch normalization (batch normalization), pixel-level summation, and upsampling on a feature plane.

In some implementations, the vector calculation unit 2107 can store a processed output vector in the unified memory 2106. For example, the vector calculation unit 2107 may apply a linear function or a non-linear function to the output of the operation circuit 2103, for example, perform linear interpolation on a feature plane extracted by the convolutional layer, for another example, add value vectors, to generate an activation value. In some implementations, the vector calculation unit 2107 generates a normalized value, a pixel-level summation value, or both. In some implementations, the processed output vector can be used as an activation input for the operation circuit 2103, for example, used in a subsequent layer in the neural network.

The instruction fetch buffer (instruction fetch buffer) 2109 connected to the controller 2104 is configured to store instructions used by the controller 2104.

The unified memory 2106, the input memory 2101, the weight memory 2102, and the instruction fetch buffer 2109 are all on-chip memories. The external memory is private for a hardware architecture of the NPU.

The processor mentioned above may be a general-purpose central processing unit, a microprocessor, an ASIC, or one or more integrated circuits for controlling program execution.

In addition, it should be noted that the described apparatus embodiments are merely examples. The units described as separate parts may or may not be physically separate, and parts displayed as units may or may not be physical units, may be located in one position, or may be distributed on a plurality of network units. Some or all of the modules may be selected based on actual needs to achieve the objectives of the solutions of embodiments. In addition, in accompanying drawings of the apparatus embodiments provided by this application, connection relationships between modules indicate that the modules have communication connections with each other, which may be specifically implemented as one or more communication buses or signal cables.

Based on the descriptions of the foregoing implementations, a person skilled in the art may clearly understand that this application may be implemented by software and necessary universal hardware, or by dedicated hardware, including a dedicated integrated circuit, a dedicated CPU, a dedicated memory, a dedicated component, and the like. Generally, any functions that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a training device, or a network device) to perform the methods in embodiments of this application.

All or some of the foregoing embodiments may be implemented by using software, hardware, firmware, or any combination thereof. When software is used to implement embodiments, all or a part of the embodiments may be implemented in a form of a computer program product.

The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, training device, or data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a training device or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

**Claims**

1. A neural network structure determining method, wherein the method comprises:

   obtaining a to-be-trained initial neural network, wherein the initial neural network comprises M first blocks block and a second block, the second block is connected to each first block, each first block corresponds to one target weight, the second block is used to perform, based on M first outputs, an operation corresponding to the second block, the M first outputs each are obtained by performing a product operation on an output of each first block and the corresponding target weight, and the target weight is a trainable weight, wherein M is an integer greater than 1;

performing model training on the initial neural network, to obtain M updated target weights; and

updating a connection relationship between the second block and the M first blocks in the initial neural network based on the M updated target weights, to obtain a first neural network, wherein the second block in the first neural network is used to perform, based on outputs of N first blocks corresponding to N largest target weights in the M updated target weights, the operation corresponding to the second block, wherein N is less than M.

2. The method according to claim 1, wherein the M first blocks and the second block in the initial neural network sequentially form a serial connection, the second block is an end point of the serial connection, the M first blocks in the initial neural network comprise a target block, the target block is connected to the second block on the serial connection, and when an updated target weight corresponding to the target block is not comprised in the N largest target weights in the M updated target weights, the second block in the first neural network is further used to perform, based on an output of the target block, the operation corresponding to the second block.

3. The method according to claim 2, wherein N is 1.

4. The method according to any one of claims 1 to 3, wherein the performing model training on the initial neural network, to obtain M updated target weights comprises:
performing model training on the initial neural network for a first preset quantity of iterations, to obtain the M updated target weights.

5. The method according to any one of claims 1 to 4, wherein the method further comprises:
performing model training on the first neural network until data processing precision of the first neural network meets a preset condition or a quantity of iterations of model training reaches a second preset quantity of iterations, to obtain a second neural network.

6. The method according to any one of claims 1 to 5, wherein quantities of input channels and output channels of each of the M first blocks are the same as quantities of input channels and output channels of the second block.

7. The method according to any one of claims 1 to 6, wherein the second block in the initial neural network is used to perform, based on a summation result of the M first outputs, the operation corresponding to the second block; and the second block in the first neural network is used to perform, based on a summation result of the outputs of the first blocks corresponding to the N largest target weights in the M updated target weights, the operation corresponding to the second block.

8. The method according to any one of claims 1 to 7, wherein the method further comprises:
obtaining to-be-trained data, wherein the to-be-trained data comprises at least one of the following: image data, text data, and voice data; and correspondingly, the performing model training on the initial neural network comprises:
performing model training on the initial neural network based on the to-be-trained data.

9. A neural network structure determining method, wherein the method comprises:

obtaining a to-be-trained initial neural network, wherein the initial neural network comprises M first blocks block and a second block, the second block is connected to each first block, each first block corresponds to one target weight, each first block is used to perform, based on a corresponding first output, an operation corresponding to the first block, the first output corresponding to each first block is obtained by performing a product operation on the target weight corresponding to the first block and an output of the second block, and the target weight is a trainable weight, wherein M is an integer greater than 1;

performing model training on the initial neural network, to obtain M updated target weights; and

updating a connection relationship between the second block and the M first blocks in the initial neural network based on the M updated target weights, to obtain a first neural network, wherein first blocks corresponding to N largest target weights in the M updated target weights are used to perform, based on the output of the second block, the operation corresponding to the first block, wherein N is less than M.

10. The method according to claim 9, wherein the second block and the M first blocks in the initial neural network sequentially form a serial connection, the second block is a start point of the serial connection, the M first blocks in the initial neural network comprise a target block, the target block is connected to the second block on the serial path, and when an updated target weight corresponding to the target block is not comprised in the N largest target weights in the M updated target weights, the target block in the first neural network is further used to perform, based on the output of the second block, the operation corresponding to the target block.

11. The method according to claim 10, wherein N is 1.

12. The method according to any one of claims 9 to 11, wherein the performing model training on the initial neural network, to obtain M updated target weights comprises:
performing model training on the initial neural network for a first preset quantity of iterations, to obtain the M updated target weights.

13. The method according to any one of claims 9 to 12, wherein the method further comprises:
performing model training on the first neural network until data processing precision of the first neural network meets a preset condition or a quantity of iterations of model training reaches a second preset quantity of iterations, to obtain a second neural network.

14. The method according to any one of claims 9 to 13, wherein quantities of input channels and output channels of each of the M first blocks are the same as quantities of input channels and output channels of the second block.

15. The method according to any one of claims 9 to 14, wherein the method further comprises:
obtaining to-be-trained data, wherein the to-be-trained data comprises at least one of the following: image data, text data, and voice data; and correspondingly, the performing model training on the initial neural network comprises:
performing model training on the initial neural network based on the to-be-trained data.

16. A neural network structure determining method, wherein the method comprises:

obtaining a plurality of target codes, wherein each target code indicates one candidate neural network, the plurality of target codes comprise a first target code and a plurality of first codes, and the first target code indicates a first neural network;
performing model training on the first neural network, to obtain data processing precision of the first neural network;
determining, based on a difference between the first target code and the plurality of first codes and the data processing precision of the first neural network, data processing precision of a candidate neural network indicated by each first code;
obtaining a first candidate neural network with highest data processing precision in candidate neural networks indicated by the plurality of target codes; and
performing model training on the first candidate neural network, to obtain a first target neural network.

17. The method according to claim 16, wherein the method further comprises:

obtaining data processing precision of the first target neural network, wherein the plurality of target codes comprise a second target code, and the second target code indicates the first target neural network;
determining, based on a difference between the second target code and a code other than the second target code in the plurality of target codes and the data processing precision of the first target neural network, data processing precision of a candidate neural network indicated by each target code other than the second target code in the plurality of target codes; and
determining, based on data processing precision of the candidate neural networks indicated by the plurality of target codes, a second candidate neural network with highest data processing precision, and performing model training on the second candidate neural network, to obtain a second target neural network.

18. The method according to claim 16 or 17, wherein each target code indicates at least one of the following structure features of a candidate neural network:
a type of an operation unit comprised in the candidate neural network, a quantity of operation units comprised in the candidate neural network, and quantities of input feature channels and output feature channels of the operation unit comprised in the candidate neural network.

**19.** The method according to any one of claims 16 to 18, wherein the method further comprises:
clustering a plurality of codes, to obtain a plurality of code sets, wherein each code set corresponds to one clustering category, the plurality of code sets comprise a target code set, and the target code set comprises the plurality of target codes.

**20.** The method according to claim 19, wherein the first target code is a clustering center of the target code set.

**21.** The method according to any one of claims 16 to 20, wherein the candidate neural network indicated by each target code meets at least one of the following conditions:

a calculation amount required when the candidate neural network indicated by each target code runs is less than a first preset value;
a quantity of weights comprised in the candidate neural network indicated by each target code is less than a second preset value; and
a running speed at which the candidate neural network indicated by each target code runs is greater than a third preset value.

**22.** The method according to any one of claims 16 to 21, wherein the first candidate neural network comprises M first blocks block and a second block, the second block is connected to each first block, each first block corresponds to one target weight, the second block is used to perform, based on M first outputs, an operation corresponding to the second block, the M first outputs each are obtained by performing a product operation on an output of each first block and the corresponding target weight, and the target weight is a trainable weight, wherein M is an integer greater than 1; and
the performing model training on the first candidate neural network, to obtain a first target neural network comprises:

performing model training on the first candidate neural network, to obtain M updated target weights;
updating a connection relationship between the second block and the M first blocks in the first candidate neural network based on the M updated target weights, to obtain a second neural network, wherein the second block in the second neural network is used to perform, based on outputs of first blocks corresponding to N largest target weights in the M updated target weights, the operation corresponding to the second block, wherein N is less than M; and
performing model training on the second neural network, to obtain the first target neural network.

**23.** The method according to any one of claims 16 to 21, wherein the first candidate neural network comprises M first blocks block and a second block, the second block is connected to each first block, each first block corresponds to one target weight, each first block is used to perform, based on a corresponding first output, an operation corresponding to the first block, the first output corresponding to each first block is obtained by performing a product operation on the target weight corresponding to the first block and an output of the second block, and the target weight is a trainable weight, wherein M is an integer greater than 1; and
the performing model training on the first candidate neural network, to obtain a first target neural network comprises:

performing model training on the first candidate neural network, to obtain M updated target weights;
updating a connection relationship between the second block and the M first blocks in the first candidate neural network based on the M updated target weights, to obtain a second neural network, wherein first blocks corresponding to N largest target weights in the M updated target weights are used to perform, based on the output of the second block, the operation corresponding to the first block, wherein N is less than M; and
performing model training on the second neural network, to obtain the first target neural network.

**24.** A neural network structure determining apparatus, comprising a storage medium, a processing circuit, and a bus system, wherein the storage medium is configured to store instructions, and the processing circuit is configured to execute the instructions in the memory, to perform steps in the method according to any one of claims 1 to 23.

**25.** A computer-readable storage medium, storing a computer program, wherein when the program is executed by a processor, steps in the method according to any one of claims 1 to 23 is implemented.

**26.** A computer program product, wherein the computer program product comprises a code, and when the code is executed, the code is used to implement steps in the method according to any one of claims 1 to 23.

FIG. 1

Planning and control
(obstacle evasion/traffic light
decision-making/traffic sign
decision-making)

Planning and control
(obstacle evasion)

Laser rangefinder fusion

Automatic parking/Image
composition and positioning

Input an
image

FIG. 2

100

Data collection device
160

Training sample

Database 130

Training device 120

Main
area

Object
category

Execution device
110

User behavior

I/O
interface
112

Object
category

Client
device 140

CNN feature extraction
model

Calculation module 111

Data storage
system 150

FIG. 3

Obtain a to-be-trained initial neural network, where the initial neural network includes M first blocks and a second block, the second block is connected to each first block, each first block corresponds to one target weight, the second block is used to perform, based on M first outputs, an operation corresponding to the second block, the M first outputs each are obtained by performing a product operation on an output of each first block and the corresponding target weight, and the target weight is a trainable weight parameter, where M is an integer greater than 1 ⟋ 401

Perform model training on the initial neural network, to obtain M updated target weights ⟋ 402

Update a connection relationship between the second block and the M first blocks in the initial neural network based on the M updated target weights, to obtain a first neural network, where the second block in the first neural network is used to perform, based on outputs of first blocks corresponding to N largest target weights in the M updated target weights, the operation corresponding to the second block, where N is less than M ⟋ 403

FIG. 4

block 1 → block 2 → block 3

FIG. 5a

block 1 → block 2 → block 3 → block 4

FIG. 5b

FIG. 5c

FIG. 6

FIG. 7

FIG. 8

Updated target parameter 1

Updated target parameter 2

Summation operation

| First block 1 | First block 2 | First block 3 | Second block |

Updated target parameter 3

First block 1 → First block 2 → First block 3 → Second block

FIG. 9

Obtain a to-be-trained initial neural network, where the initial neural network includes M first blocks and a second block, the second block is connected to each first block, each first block corresponds to one target weight, each first block is used to perform, based on a corresponding first output, an operation corresponding to the first block, the first output corresponding to each first block is obtained by performing a product operation on the target weight corresponding to the first block and an output of the second block, and the target weight is a trainable weight, where M is an integer greater than 1 — 1001

Perform model training on the initial neural network, to obtain M updated target weights — 1002

Update a connection relationship between the second block and the M first blocks in the initial neural network based on the M updated target weights, to obtain a first neural network, where first blocks corresponding to N largest target weights in the M updated target weights are used to perform, based on the output of the second block, the operation corresponding to the first block, where N is less than M — 1003

FIG. 10

× Target parameter 1

× Target parameter 2

Second block

First block 1

First block 2

First block 3

× Target parameter 3

FIG. 11

× Target parameter 1

× Target parameter 2

Second block  →  First block 1  →  First block 2  →  First block 3

× Target parameter 3

Second block  →  First block 1  →  First block 2  →  First block 3

FIG. 12

Updated target parameter 1

Updated target parameter 2

| Second block | | First block 1 | | First block 2 | | First block 3 |

Updated target parameter 3

| Second block | | First block 1 | | First block 2 | | First block 3 |

FIG. 13

Obtain a plurality of target codes, where each target code indicates one candidate neural network, the plurality of target codes include a first target code and a plurality of first codes, and the first target code indicates a first neural network — 1401

Perform model training on the first neural network, to obtain data processing precision of the first neural network — 1402

Determine, based on a difference between the first target code and the plurality of first codes and the data processing precision of the first neural network, data processing precision of a candidate neural network indicated by each first code — 1403

Obtain a first candidate neural network with highest data processing precision in candidate neural networks indicated by the plurality of target codes — 1404

Perform model training on the first candidate neural network, to obtain a first target neural network — 1405

FIG. 14

AutoML system/Cloud service

FIG. 15

EP 4 227 858 A1

1600

```
┌──────────────────────────────────────────────┐
│  ┌──────────────────┐ 1601   ┌──────────────┐ 1602
│  │                  │        │ Model training│
│  │ Obtaining module │────────│    module     │
│  └──────────────────┘        └───────┬───────┘
│                                      │   1603
│                              ┌───────┴───────┐
│                              │ Model updating│
│                              │    module     │
│                              └───────────────┘
└──────────────────────────────────────────────┘
```

FIG. 16

1700

```
┌──────────────────────────────────────────────┐
│  ┌──────────────────┐ 1701   ┌──────────────┐ 1702
│  │                  │        │ Model training│
│  │ Obtaining module │────────│    module     │
│  └──────────────────┘        └───────┬───────┘
│                                      │   1703
│                              ┌───────┴───────┐
│                              │ Model updating│
│                              │    module     │
│                              └───────────────┘
└──────────────────────────────────────────────┘
```

FIG. 17

1800

```
┌──────────────────────────────────────────────┐
│  ┌──────────────────┐ 1801   ┌──────────────┐ 1802
│  │                  │        │ Model training│
│  │ Obtaining module │────────│    module     │
│  └─────────┬────────┘        └───────┬───────┘
│            │                         │   1803
│            │                 ┌───────┴───────┐
│            └─────────────────│   Precision   │
│                              │determining module│
│                              └───────────────┘
└──────────────────────────────────────────────┘
```

FIG. 18

1900

Execution device

Antenna

Antenna

| Receiver 1901 | Transmitter 1902 |
|---|---|

Processor 1903

| Memory 1904 | Application processor 19031 | Communication processor 19032 |
|---|---|---|

FIG. 19

2000

Training device

2020  Central processing unit     Power supply    2026

Operating system    2041

Data    2044

Application program    2042

Storage medium    2030

Memory    2032

Wired or wireless network interface    2050

Input/Output interface    2058

FIG. 20

FIG. 21

<div align="center">INTERNATIONAL SEARCH REPORT</div>

| International application No. |
| --- |
| **PCT/CN2021/129757** |

**A. CLASSIFICATION OF SUBJECT MATTER**

G06N 3/08(2006.01)i

According to International Patent Classification (IPC) or to both national classification and IPC

**B. FIELDS SEARCHED**

Minimum documentation searched (classification system followed by classification symbols)

G06N

Documentation searched other than minimum documentation to the extent that such documents are included in the fields searched

Electronic data base consulted during the international search (name of data base and, where practicable, search terms used)

CNPAT, WPI, EPODOC, CNKI, IEEE: 神经网络, 结构块, 权重, 更新, 连接, 乘积, 目标, 训练, 候选, 精度, 差异, 差值, neural, network, structural, block, weight, update, connection, product, target, training, candidate, accuracy, difference

**C. DOCUMENTS CONSIDERED TO BE RELEVANT**

| Category* | Citation of document, with indication, where appropriate, of the relevant passages | Relevant to claim No. |
| --- | --- | --- |
| A | CN 106709565 A (GUANGZHOU SHIYUAN ELECTRONIC TECHNOLOGY COMPANY LIMITED) 24 May 2017 (2017-05-24) abstract, description, paragraphs [0019]-[0070] | 1-26 |
| A | CN 106960243 A (CENTRAL SOUTH UNIVERSITY) 18 July 2017 (2017-07-18) entire document | 1-26 |
| A | CN 111160488 A (CIVIL AVIATION UNIVERSITY OF CHINA) 15 May 2020 (2020-05-15) entire document | 1-26 |
| A | CN 107341512 A (GUANGDONG UNIVERSITY OF TECHNOLOGY) 10 November 2017 (2017-11-10) entire document | 1-26 |
| A | WO 2019089553 A1 (WAVE COMPUTING, INC.) 09 May 2019 (2019-05-09) entire document | 1-26 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **13 January 2022** | **10 February 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/129757**

| Patent document cited in search report | | | Publication date (day/month/year) | Patent family member(s) | | | Publication date (day/month/year) |
|---|---|---|---|---|---|---|---|
| CN | 106709565 | A | 24 May 2017 | None | | | |
| CN | 106960243 | A | 18 July 2017 | None | | | |
| CN | 111160488 | A | 15 May 2020 | None | | | |
| CN | 107341512 | A | 10 November 2017 | None | | | |
| WO | 2019089553 | A1 | 09 May 2019 | US | 2018181503 | A1 | 28 June 2018 |
| | | | | WO | 2019006119 | A1 | 03 January 2019 |
| | | | | WO | 2019032396 | A1 | 14 February 2019 |
| | | | | WO | 2019040339 | A1 | 28 February 2019 |
| | | | | WO | 2019084254 | A1 | 02 May 2019 |
| | | | | WO | 2019113007 | A1 | 13 June 2019 |
| | | | | WO | 2019113021 | A1 | 13 June 2019 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202011268949